(19) **Europäisches Patentamt**
**European Patent Office**
**Office européen des brevets**

(11) **EP 4 749 509 A1**

(12) **EUROPEAN PATENT APPLICATION**

(43) Date of publication:
27.05.2026 Bulletin 2026/22

(51) International Patent Classification (IPC):
*G06F 30/23* (2020.01)   *A61C 13/00* (2006.01)
*G06T 17/20* (2006.01)   *G06F 30/27* (2020.01)
*G06F 113/10* (2020.01)   *G06F 111/16* (2020.01)

(21) Application number: 24214252.9

(22) Date of filing: 20.11.2024

(52) Cooperative Patent Classification (CPC):
**G06F 30/23; A61C 7/002; A61C 7/08;**
**A61C 13/0004; G06F 30/27; G06T 17/205;**
G06F 2111/16; G06F 2113/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Universität Heidelberg**
**69117 Heidelberg (DE)**

(72) Inventors:
• **Roser, Christoph Johannes**
**69121 Heidelberg (DE)**
• **Sadlo, Filip**
**69124 Heidelberg (DE)**
• **Weinmann, Rene**
**69198 Schriesheim (DE)**
• **Mielke, Juliana**
**60385 Frankfurt (DE)**

(74) Representative: **Fleuchaus & Gallo Partnerschaft**
**mbB**
**Steinerstraße 15/A**
**81369 München (DE)**

(54) **SYSTEM AND METHOD FOR GENERATING MANUFACTURING-MACHINE CONTROL DATA FOR THE MANUFACTURING OF ORTHODONTIC APPLIANCES**

(57)     Computer system (100) and computer-implemented method are provided for automated generation of manufacturing-machine control data (291) for the manufacturing of an orthodontic appliance (280) for a patient (2). Based on three-dimensional representations (210) of the patient's oral anatomy and an appliance type (211) of the orthodontic appliance, the system generates a control structure (111) comprising a mesh providing an initial representation (111pi) of an aimed appliance geometry, and subdivision manifold-related shape attribute information (llls) with a subdivision scheme, implicit manifold-related shape attribute information (111i) with a scalar field, and information for evaluating a respective position of the respective vertex. Executing a subdivision according to the subdivision scheme generates a modified control structure (111m). For added vertices, respective shape attribute information is evaluated to obtain the position of the respective vertices. Once a final mesh is obtained, it is transformed into manufacturing-machine control data for the manufacturing of the orthodontic appliance, and provided to corresponding manufacturing means (290).

FIG. 1

## Description

### Technical Field

The present invention generally relates to the field of orthodontic treatment. In more detail, the invention relates to systems and methods for automated modeling and manufacturing of orthodontic appliances for orthodontic treatment.

### Background

The current state of the art for manufacturing of orthodontic appliances involves manual application of materials to a plaster model, or computer-aided manual (at most partially automated) modeling. However, both procedures are limited, e.g., it is hard to fulfill therapeutically required distances between the appliance and the oral anatomy of the patient. During the manual application, such distances between appliance and anatomy are typically implemented by applying wax as a spacer to the plaster model, before the subsequent transfer in acrylic (Koebel CF, Lux C. The functional regulator type 3 according to Fraenkel-part 2. Kieferorthopaedie. 2015;29(1):1-19). Such manual application of materials to a plaster model is limited in its accuracy, because, e.g., the thickness of the applied wax spacer is hard to control and because its thickness can only be measured at discrete positions. In case of computer-aided manual modelling, the procedure is still limited in its accuracy in terms of required construction properties. Fulfilling such required construction properties of an appliance at high fidelity is necessary to ensure therapeutic effectiveness and compliance for a patient.

### Summary

In short, the herein disclosed approach addresses prior art limitations of accuracy in terms of construction properties, such as the distances between appliance and oral anatomy for therapeutic effectiveness, by automated modeling and manufacturing of an orthodontic appliance, based on predefined rules transferred from medical knowledge and relating the shape of an appliance to the oral anatomy of the patient. The patient's oral anatomy typically includes two jaw parts (covered with soft tissue) with the respective teeth of the patient. It further includes the oral soft tissue of the patient.

Improvements over prior art approaches are achieved through a geometrical model of the appliance, whose degrees of freedom are set by said predefined rules derived from medical knowledge. An implementation example of such geometrical model are subdivision surfaces, which are defined in terms of a control structure (CS) that provides a coarse initial polygon mesh representation (also denoted control mesh) of the aimed geometry. During the subdivision process, the control structure is iteratively subdivided (refined), where such subdivided control structure is denoted modified control structure. Thereby, a polygon is split into at least two polygons in such iteration (according to respective subdivision rules (SR)), necessitating the introduction of new vertices connected to the new polygons. Besides such topological splitting, the SR also define how to determine the position of the new vertices from the vertices of the previous iteration, and thus implicitly determine the shape and, e.g., smoothness of the subdivision surface that the subdivision process converges to. A person skilled in the art is able to mathematically prove the convergence of the subdivision process. These SR, together with the topology (mesh connectivity) and geometry (vertex positions, also denoted control points) of the control structure define a respective subdivision surface, with the Loop subdivision scheme being a widely known example. In practice, a rather low subdivision iteration count (typically 3-4 iterations, advantageously between 2 and 6 iterations) is sufficient to obtain appropriate results, provided as finely resolved meshes. Subdivision schemes may not only define the position of the new vertices, but may also change the position of existing vertices from the previous iteration (such as, e.g., the Loop subdivision). Overall, an advantage of subdivision surfaces is that only the topology and the positions of a comparably low count of vertices (of the initial polygon mesh) are to be defined, providing effective control over the resulting geometry. Another implementation example of the geometrical model are subdivision volumes, a direct extension of subdivision surfaces from polygonal meshes to volumetric (unstructured) meshes. Subdivision surfaces and subdivision volumes are herein referred to as subdivision manifolds (SM) in general, and are represented by a mesh comprising vertices and cells. In the case of subdivision surfaces, the cells represent polygons, whereas in the case of subdivision volumes, the cells are volumetric, e.g., tetrahedra or hexahedra. A further geometrical model implementation are implicit surfaces, also known as isosurfaces, level sets, or contours, comprising the sets of points in space at which a continuous scalar field exhibits a prescribed value, denoted isovalue. A related geometrical model are interval volumes (I. Fujishiro, Y. Maeda and H. Sato, "Interval volume: a solid fitting technique for volumetric data display and analysis," Proceedings Visualization '95, Atlanta, GA, USA, 1995, pp. 151-158, doi: 10.1109/VISUAL.1995.480807), which comprise the volume confined by two isosurfaces with different isovalue, employed to the same scalar field, or, in other words, comprise the set of points in space at which a continuous scalar field exhibits values within a given interval defined by the two isovalues. Interval volume intersections (IVI), which for a given set of interval volumes (with each interval volume defined by a separate scalar field) comprise the set of points in space that are located within all interval volumes, represent a generalization of interval volumes and are also a useful geometrical model in this context. The following disclosure refers to implicit surfaces, interval volumes, and interval volume intersections as implicit manifolds (IM) as collective term.

In the herein disclosed approach, a novel geometrical model, denoted hybrid subdivision manifold (HSM), is presented that combines the subdivision manifolds with the implicit manifolds, although the subdivision manifolds can also be combined with other geometrical models in that context. In a basic implementation, the appliance definition includes such appliance geometry, defined in terms of a HSM.

Subdivision manifolds aim for mathematically provable manifold properties, such as smoothness, which is a reason why their explicit shape is rather hard to control. Since, however, such detailed shape is required for fulfilling the therapeutically required construction properties (such as distances between orthodontic appliance and oral anatomy), the concept of subdivision manifolds is generalized to shape attributes (SAs), leading to the hybrid subdivision manifolds. A shape attribute is information related to the vertices and/or cells of the subdivision manifold that contributes to the shape of the resulting HSM. Shape attributes are contained in the control structure and modified control structure, and have a local component and a global component. The local component of a SA can be vertex-based and/or cell-based and can include weights or isovalues defined for each vertex and/or cell. The global component of a SA can include subdivision schemes and the scalar fields that define the implicit manifolds. In the following, SAs that are given in terms of subdivision surfaces and implicit surfaces are described as an example in detail. Generally, any geometrical model can be used as SA, with the only requirement that all SAs used in a HSM have to produce (or can be evaluated to produce) identical topology of the mesh during subdivision, i.e., that the positions contributed by the SAs for new (and existing) vertices can be averaged to obtain a vertex position in the HSM. At least one SA of the HSM has to represent a subdivision scheme, and if this SA would be the only SA in the HSM and if the control structure would include no additional information, the HSM would be equivalent to the SM, i.e., HSM generalize SM. In a simple configuration, the control structure stores at each of its vertices the initial 3D position of the vertex, as well as for each SA a shape attribute weight (SAW) that defines how much the respective SA contributes to the resulting position of a new (or adjusted existing) vertex during subdivision. SAs that involve additional parameters, such as the isovalue(s) in the case of implicit-manifold SA, additionally store such values in the local component of the SA, e.g., at the vertices. SA information that is identical for all vertices (and cells), such as typically the SR in case of a subdivision-manifold SA, or such as the scalar field(s) in case of an implicit-manifold SA, is defined in terms of the global component of a SA (i.e., not per vertex or cell). Whereas a subdivision-manifold SA provides a single position when evaluated for a given vertex, an implicit-manifold SA relates a given vertex to entire manifolds (surfaces in case of isosurfaces and volumes in case of IVI) for a given (set of) isovalue(s). That is, a point on that manifold needs to be selected according to some predefined rules, referred to as point selection rules (PSR), which are included in the implicit-manifold SA. The resulting position for the new (or existing) vertex is then obtained by weighted averaging, i.e., by multiplying each SA's proposed position with the respective SAW and summing the results, with the constraint that all SAWs need to be nonnegative and sum up to one.

The PSR for an implicit-manifold SA are based on an intermediate position IP. The intermediate position IP is typically obtained by means of the involved subdivision-manifold SA(s). There exist several concepts how to obtain the resulting position of the implicit-manifold SA from the intermediate position. One approach is to evaluate the gradient of the respective scalar field at the IP, and if the value of the scalar field at the IP is smaller than the respective isovalue, one steps in direction of the gradient at the IP, e.g., using bisection, until the first position on the ray (starting at the IP and oriented along the gradient at the IP) is found where the scalar field exhibits the aimed isovalue. If the value of the scalar field at the IP is larger than the respective isovalue, the procedure is carried out in negative gradient direction. In case of IVI(s), such a ray is cast for each involved scalar field and the resulting positions are, e.g., averaged. A second approach is to follow the forward slope line from the IP until the position where the respective scalar field exhibits the aimed isovalue, and in case of IVI(s), the resulting positions are, e.g., averaged. The slope line is obtained by (e.g., Runge-Kutta) integration (initial value problem integration, also known as streamline tracing) of the gradient field of the respective scalar field. Also here, the procedure is carried out in negative gradient direction if the value of the respective scalar field at IP is larger than the aimed isovalue.

The orthodontic appliance is modeled based on the patient's oral anatomy, which is provided in terms of one or more 3D representations (e.g., by means of 3D scans), also denoted 3D scans herein. Such 3D scans can be surface-based or volumetric, and can be derived from measurements obtained by respective acquisition technologies known in the art. The 3D scans may have gone through some data preprocessing before being used as input for the generation of the control structure. For example, holes in surface-based 3D scans can be closed, and the 3D scans can also be segmented into individual teeth and oral soft tissue, which can be accomplished by existing approaches. The following example describes aspects of the solution by exemplifying the use of surface-based 3D scans, that is, e.g., a tooth herein typically comprises its visible part (without root etc.) of the anatomy's 3D representation. Volumetric 3D scans may comprise further elements, such as the root. A skilled person may use other methods than segmentation for identifying a patient's teeth and oral soft tissue in such 3D scans of the oral anatomy. The 3D representations of the patient's teeth and oral soft tissue, characterizing a current state of the patient's oral anatomy, are then provided as input to the herein disclosed method for the automated generation of manufacturing-machine control data for the manufacturing of said orthodontic appliance for the patient. In the following, the term 'oral anatomy' is often used for both the patient's oral anatomy and its 3D representation. This is accomplished using predefined construction rules which are used to determine at least the topology and geometry of the control structure, and the shape attributes, based on the oral anatomy. Said construction rules are predefined from medical knowledge. The construction rules may be defined as explicit geometrical construction rules expressed by mathematical and/or algorithmic terms, and/or may be learned from the oral anatomy and medical knowledge by a machine learning process, e.g., based on previous treatments.

A CS generation module (CSG) generates the CS topology and geometry, and for each vertex of the CS the SAW(s). For each subdivision-manifold SA, it also (globally) defines the SR. For each implicit-manifold SA, it also defines the isovalue(s) locally (e.g., at each vertex and/or cell), and globally the respective scalar field(s), as well as the PSR (which are typically defined globally). Additional user-defined input may be received to allow a user (e.g., a therapist) to adjust/correct a control structure which has been generated from the 3D scans of the oral anatomy, or even explicitly define (parts of) the control structure. Such user-defined input can also change the mesh and respective shape attribute information between subdivision iterations.

The hybrid subdivision (HSD) module executes the subdivision. It evaluates the SAs and obtains the positions for the resulting new (and possibly existing) vertices by the above-described weighted averaging. It also provides the new (and possibly existing) vertices with shape attributes. Once all vertices are processed, a new iteration of subdivision is employed, i.e., the subdivided (modified) control structure is used as input for the next subdivision iteration. The subdivision terminates once a predefined termination condition is fulfilled. For example, the termination condition may be that a predefined number of subdivision iterations has been performed. Other termination conditions may be used, such as if the geometric change of the mesh caused by a subdivision iteration falls below a user-defined threshold.

Once the subdivision iterations are terminated, the final mesh is a representation of the orthodontic appliance to be manufactured for the patient. The final mesh is transformed into manufacturing-machine control data, which are then provided to respective manufacturing means to finally manufacture the orthodontic appliance.

Embodiments of the herein disclosed approach, as depicted by the independent claims, overcome limitations as they occur in prior art solutions, such as inaccurately fulfilling required construction properties that include therapeutically determined distances between appliance and oral anatomy, and long and tedious production times of the appliance (also for production of replacement copies). In one embodiment, the claimed computer-implemented method for automated generation of manufacturing-machine control data for the manufacturing of an orthodontic appliance for a patient improves accuracy and thus therapeutic effectiveness for a patient. This is because the improved accuracy enables a more frequent change of appliances (requiring smaller changes between subsequent therapeutic steps), which can then be generated more specifically for the respective treatment tasks and/or through which the treatment tasks can be divided into individual smaller corrections. An example is the therapy of a class II (retrognathia) patient with an increased overjet. Previously, it was common practice to correct an overjet in large steps. In contrast, the claimed method allows the appliances to be adjusted much more accurately and therefore enables an overjet correction in small individual steps. This increases the therapeutic effectiveness and also the wearing comfort, which is a key factor for a good patient compliance and therefore for a successful therapy. Furthermore, it increases patient compliance due to shortened re-integration after, e.g., loss or damage. In one embodiment, a computer program product is provided which has computer-readable instructions, that when executed by a computer system, cause the computer system to perform said computer-implemented method. In a further embodiment, said computer system is provided.

The computer-implemented method for automated generation of manufacturing-machine control data for the manufacturing of an orthodontic appliance for a patient starts with receiving, by a computer system via an interface, an appliance type of the orthodontic appliance and one or more three-dimensional representations of the patient's individual teeth and oral soft tissue. The three-dimensional representations are derived from measurements obtained by a respective acquisition technology (e.g., 3D scans) for characterizing a current state of the patient's oral anatomy, and may represent the surface and/or the volume of the patient's oral anatomy. This may include one or more data preprocessing steps applied to the originally acquired data. The appliance type (e.g., functional regulator type 3, FR3) may be received as a user input from a therapist of the patient. Further examples of well-known appliance types include but are not limited to: the Activator, the Bionator, the Twin Block, the Space Maintainer, and the Oral Vestibular Trainer Plates. The appliance type may also be automatically selected by a software application which is adapted to evaluate the 3D scans and make a corresponding appliance type decision.

A control structure generator module of said computer system generates a control structure which comprises a mesh and shape attribute information. The mesh provides an initial representation of an aimed appliance geometry associated with said appliance type. The aimed appliance geometry is thereby the geometry of the appliance which is desired for achieving a respective therapeutic effect for the patient. The shape attribute information comprises at least one subdivision scheme, at least one scalar field, and for each vertex of the mesh, information for evaluating a position of the respective vertex according to the at least one subdivision scheme and for evaluating a position of the respective vertex according to the at least one scalar field (in terms of the point selection rules). Further, the shape attribute information includes respective shape attribute weights defining how much said positions contribute to a position of the respective vertex.

A hybrid subdivision module of the computer system executes a subdivision according to the at least one subdivision scheme to generate a modified control structure comprising a modified mesh representation by splitting existing cells and adding new vertices with respective shape attribute information. Further, the subdivision module evaluates, for each added new vertex, the respective shape attribute information to obtain the position of the respective vertex. The subdivision module may also evaluate respective shape attribute information for existing vertices to modify the position of the respective vertex. The subdivision module thereby "inherits" shape attributes for added new vertices and for modified existing vertices from existing vertices.

For example, in one implementation, the information for evaluating a position of the respective vertex according to the at least one subdivision scheme is associated with corresponding subdivision rules and comprises a subdivision mask with a respective shape attribute weight, and the information for evaluating a position of the respective vertex according to the at least one scalar field defines at least one isovalue at the respective vertex and is associated with respective point selection rules to obtain a point on the implicit manifold for these isovalue(s), including a respective shape attribute weight. In other words, the vertex position of an added new vertex is set to a weighted average of the evaluated positions, weighted by the respective shape attribute weight.

In one implementation, the vertex-based and/or cell-based shape attribute information further contains prescribed minimum and/or maximum values for one or more selected scalar fields, and if such a minimum or maximum condition is violated at the position of the respective vertex obtained in the evaluating step, said position is moved to a corresponding isosurface with isovalue given by said minimum or maximum, using respective point selection rules. This procedure includes merging strategies, such as iterative evaluation or averaging, if more than one scalar field (e.g., more than one implicit-manifold SA) is involved. Such iterative strategies may converge to a position that does not satisfy all involved minimum/maximum conditions, e.g., in case of contradicting minimum/maximum conditions. Nevertheless, such converged position can be used in such cases.

In implementations with a plurality of involved subdivision schemes, the involved subdivision schemes are topologically equivalent in that they divide the same edges/cells of the mesh into the same number of parts, and involve topologically equivalent new vertices.

The subdivision and evaluation steps are repeatedly executed for the modified control structure until a predefined termination condition is fulfilled to obtain a final mesh. In other words, the modified mesh representation (modified control structure) is subject to further subdivision(s) in accordance with the subdivision scheme, resulting, by including all shape attributes, in a new modified mesh representation after each subdivision iteration. Once the termination condition is fulfilled (e.g., a predefined number of iterations has been completed or the geometric change of the mesh caused by a subdivision iteration falls below a predefined threshold), the current modified mesh representation (i.e., the mesh representation after the last iteration) provides a final mesh which represents the geometry of the to-be-manufactured orthodontic appliance.

The final mesh is then transformed by a transformation module into manufacturing-machine control data for the manufacturing of the orthodontic appliance. Examples of commonly used data formats for such manufacturing-machine control data include but are not limited to: STL, AMF, PLY, and OBJ.

Finally, the transformation module provides the manufacturing-machine control data to corresponding manufacturing means. Examples of appropriate manufacturing means include, but are not limited to: 3D printing (e.g., stereolithography, fused deposition modeling, digital light processing), CNC machining (e.g., milling), selective laser cutting, selective laser melting, selective laser sintering, injection molding, and automated bending. If required for the respective manufacturing means, manufacturing-machine control data are converted to a machine-readable code. For example, this can include slicing, which means converting the manufacturing-machine control data to sequential layers for additive manufacturing processes like 3D-printing, or it can include building a tool path for subtractive manufacturing processes like CNC machining. A person skilled in the art knows how to control such manufacturing means via appropriated control means (e.g., computers) to manufacture the appliance from biocompatible material with appropriate mechanical properties (Herausnehmbare kieferorthopaedische Apparaturen im CAD/CAM-Verfahren mit Fokus auf CAD-FR3; Roser, C., Lux, C.; Kieferorthopaedie; Vol. 37).

In one embodiment, prior to executing a subdivision, the system may further receive a user input which comprises an adjustment (e.g., correction/definition) of the (modified) control structure. The adjustment can include an adjusted mesh in terms of corrected or novel (parts of the) mesh and/or adjusted or novel (parts of the) shape attribute information, replacing the mesh and shape attribute information of the current (modified) control structure. For example, such an adjustment may already be received once the system has generated the initial control structure. The initial control structure can be presented to a user (e.g., therapist) who may already apply modification to the initial generated control structure. Also, the system may present a modified mesh after an iteration of the executing and evaluating steps and receive modifications to the modified control structure from the user before starting the next iteration (i.e., executing the next subdivision). In this embodiment, the therapist can provide input based on human medical experience, which is then taken into account for the next iteration.

In one embodiment, a computer program product is provided for automated generation of manufacturing-machine control data for the manufacturing of an orthodontic appliance for a patient. The computer program comprises computer readable instructions that, when loaded into a memory of a computing device and executed by at least one processor of the computing device, causes the computing device to perform the herein disclosed computer-implemented method.

In one embodiment, a computer system is provided for automated generation of manufacturing-machine control data for the manufacturing of an orthodontic appliance for a patient. The system comprises a memory storing computer-readable instructions implementing a plurality of functional modules. It further comprises one or more processors for executing the computer-readable instructions to instantiate said functional modules for performing steps according to the herein disclosed computer-implemented method at system runtime.

Further aspects of the invention will be realized and attained by means of the elements and combinations particularly depicted in the appended claims. It is to be understood that both the foregoing general description and the following detailed description are exemplary and explanatory only and are not restrictive of the invention as described.

## Brief Description of the Figures

FIG. 1 illustrates a computer system for automated generation of manufacturing-machine control data for the manufacturing of an orthodontic appliance for a patient according to an embodiment;

FIG. 2 is a flowchart of a computer-implemented method for automated generation of manufacturing-machine control data for the manufacturing of an orthodontic appliance for a patient according to an embodiment;

FIG. 3 illustrates a subdivision process with an example of triangular polygons including weights of subdivision masks;

FIG. 4 illustrates the influence of signed distance fields;

FIG. 4A shows an example 3D scan representations of a patient's anatomy representing upper and lower jaw and in relation to each other;

FIG. 4B illustrates a wax bite to obtain the relative position of the jaws.

FIG. 5A and 5B illustrate exemplary point selection rules for determining vertex positions on implicit surfaces;

FIG. 6 shows a 2D illustration (triangles illustrated by line segments) of a hybrid subdivision manifold as it develops during subdivision iterations according to an embodiment;

FIG. 7 illustrates the application of an FR3 appliance to a patient's jaw parts;

FIG. 8 shows extraoral view examples of a class-III patient (prognathism) before, during, and after treatment;

FIG. 9 illustrates a therapy of a class-III patient with an additionally misaligned tooth;

FIG. 10 indicates elements of an FR3 appliance;

FIG. 11A illustrates the generation of vertices (control points) of a control mesh, the respective control mesh, and a resulting hybrid subdivision manifold;

FIG. 11B illustrates a cross-section of a control mesh, including control points for the buccal shields and the occlusal bite blocks;

FIG. 11C shows the steps required in order to obtain one exemplary point on the control mesh;

FIG. 11D illustrates a cross-section of the control points for the upper (maxillary) vestibular shield;

FIG. 11E shows a cross-section of the control points for the lower labial archwire;

FIG. 11F shows a side and front view of exemplary control points for the transversal connector;

FIG. 12 depicts a top view of a lower jaw and a corresponding cross-section through lower and upper jaw;

FIG. 13 illustrates an example procedure for obtaining the vestibular fold point;

FIGs. 14, 15 and 16A illustrate the generation of convex hulls for the occlusal plateau by way of example;

FIG. 16B illustrates an example for correction of control points to ensure full closure on the last teeth;

FIG. 17 illustrates a control mesh for an FR3 appliance, emphasizing its edges;

FIGs. 17A to 17E illustrate an initial control mesh for an FR3 appliance, and respective states of polygon meshes after four subsequent subdivision iterations;

FIG. 18 is a diagram that shows an example of a generic computer device and a generic mobile computer device, which may be used in embodiments of the invention.

## Detailed Description

### Part 1: Fundamentals

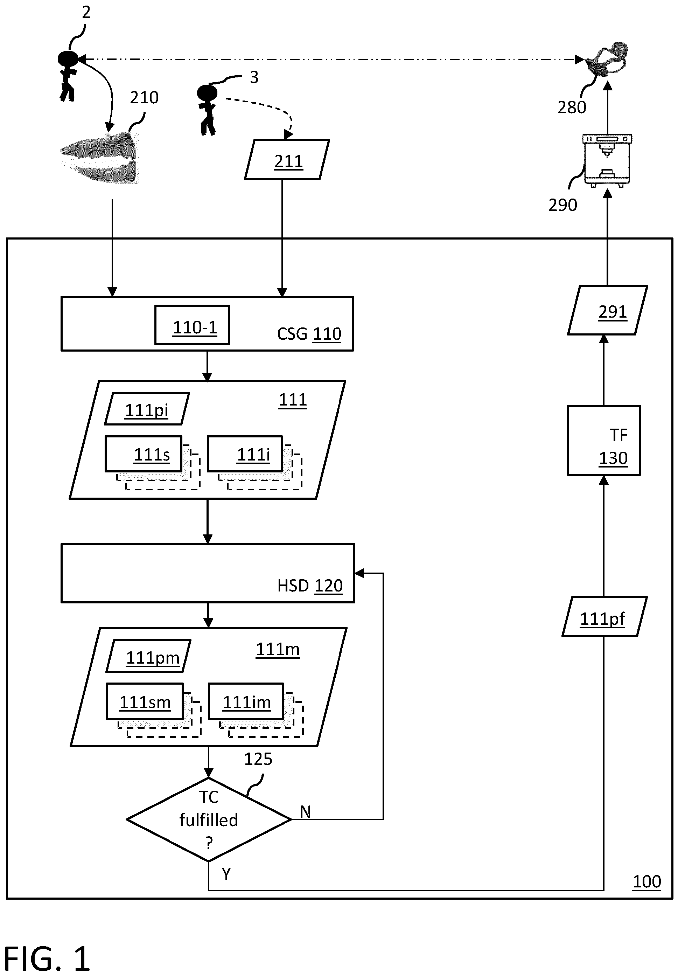

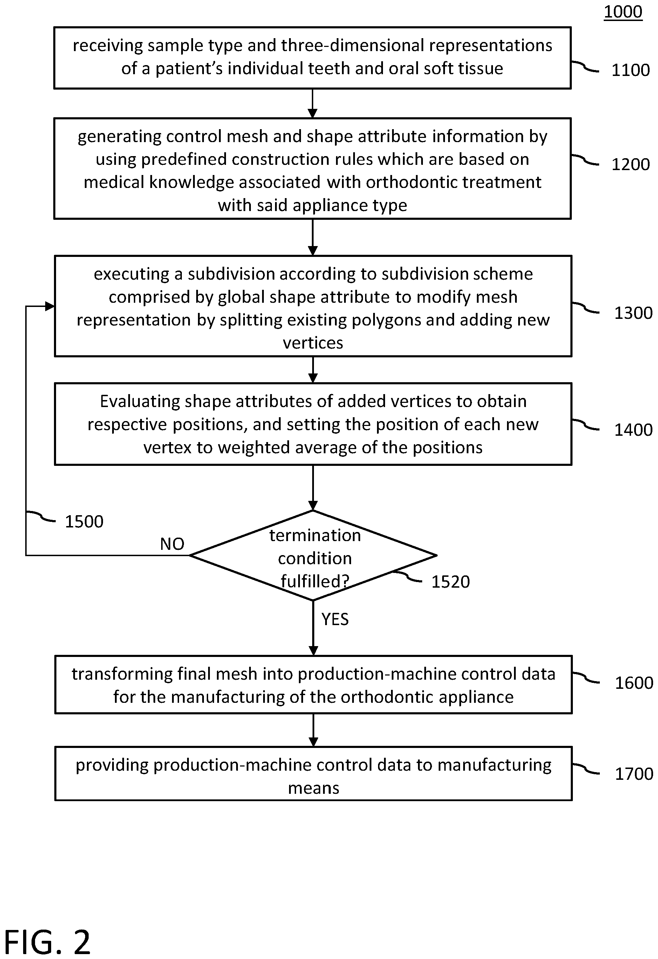

FIG. 1 illustrates a computer system 100 for automated generation of manufacturing-machine control data 291 for the manufacturing of an orthodontic appliance 280 for a patient 2. FIG. 2 is a flowchart of a computer-implemented method 1000, which can be executed by system 100 to generate such manufacturing-machine control data 291 for the manufacturing of the orthodontic appliance. System 100 is described in view of the method 1000. For this reason, reference numbers of FIG. 1 and FIG. 2 are used in the following description. The computer system has a memory to store computer-readable instructions of a computer program which implement functional modules 110 to 130 of the computer system which are adapted to execute the steps of a computer-implemented method 1000 as depicted by the example in the simplified flowchart of FIG. 2, when the computer program is executed by one or more processors of system 100.

System 100 has one or more interfaces (not shown) to exchange data with other systems (indicated by arrows crossing the system 100 boundary illustrated by a rectangle), or for human-machine interaction with a user 3 of system 100 (e.g., a therapist).

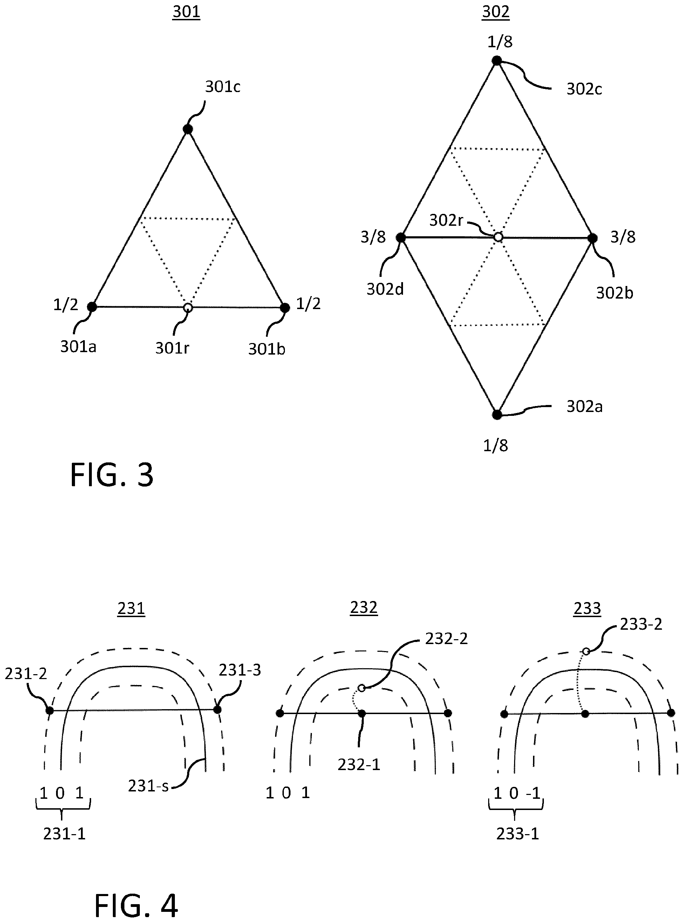

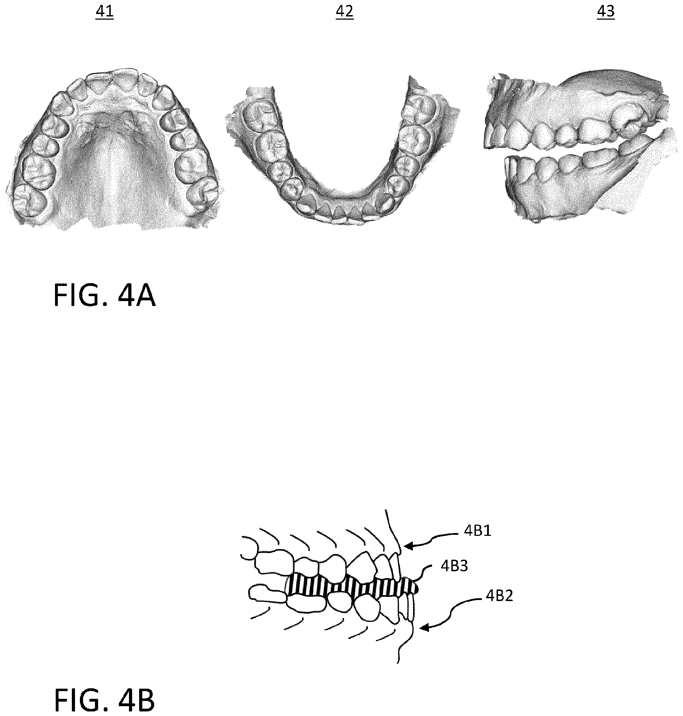

System 100 receives 1100 an appliance type 211 of the orthodontic appliance (e.g., from therapist 3), and three-dimensional representation(s) 210 of the patient's 2 individual teeth and oral soft tissue derived from measurements obtained by a respective acquisition technology (e.g., 3D-scans) for characterizing a current state of the patient's oral anatomy. For example, such data may be obtained by commercially available intraoral scanners. FIG. 4A illustrates examples of three-dimensional surface-based representations 210. Typically, three scans are performed for a patient. These comprise a separate scan of the upper and the lower jaw each and a bite relation scan to match both together in the (therapeutically motivated) enforced state of the anatomy. Scan 41 represents the upper jaw and scan 42 the lower jaw. Scan 43 shows upper and lower jaws in the respective bite relation scan. If an appliance is to be built for only one jaw, and is not affected by the anatomy of the other jaw, a single scan may sufficient. The acquisition data are received by system 100 via an appropriate interface, as a user input. The user may select a desired appliance type from an appliance catalogue. Every appliance type in the catalogue is associated with respective rules for generating the control structure.

System 100 has two core modules, which are a control structure generation module (CSG) 110 and a hybrid subdivision module (HSD) 120. Based on the three-dimensional representations 210 and predefined construction rules 110-1, CSG 110 generates 1200 a control structure 111 comprising an initial mesh (also denoted control mesh) 111pi and shape attribute information. The predefined construction rules 110-1 are based on medical knowledge associated with orthodontic treatment with said appliance type 211. The mesh provides an initial representation 111pi of an aimed appliance geometry associated with said appliance type 211. The shape attribute information comprises:

- at least one subdivision scheme for subdivision-manifold SAs 111s,

- at least one scalar field for implicit-manifold SAs 111i, including respective point selection rules,

- and for each vertex of the mesh 111pi or (or modified mesh 111pm), information for evaluating a position of the respective vertex according to the at least one subdivision scheme, and information (e.g., the isovalue) for evaluating a position of the respective vertex according to the at least one scalar field, and respective shape attribute weights defining how much said positions contribute to a position of the respective vertex.

The mesh 111pi (or modified mesh 111pm) is a 3D model structure made of vertices (points) associated with respective 3D positions. The vertices are connected by edges/faces to form cells (e.g., triangles and/or quads in case of surface manifolds, and, e.g., tetrahedra and/or hexahedra in case of volumetric manifolds). To avoid the process of generating a mesh vertex by vertex, the initial mesh 111pi advantageously is a low-resolution mesh which provides a coarse description of an aimed appliance geometry for the orthodontic appliance 280. The aimed geometry is then obtained by iterative subdivision, for which the initial state is that of the control structure 111.

To provide functional and/or physical properties/effects of the orthodontic appliance 280, the appliance needs to fulfill required construction properties. This applies in particular to adherence to therapeutically required distances between the appliance and the oral anatomy. For this purpose, the control structure 111 comprises the shape attributes. Shape attributes include rules to control the shape of a subdivided mesh. That is, each vertex is associated with a set of shape attributes, and each shape attribute proposes a position for the respective vertex. The resulting vertex position is determined from these proposed positions by weighted averaging. That is, for each shape attribute there is a shape attribute weight associated with the respective vertex, defining the contribution of said shape attribute position to the resulting vertex position. For convex combinations of n shape attributes, the shape attribute weights $w_i$ with index i must satisfy $0 \leq w_i \leq 1$ and $\sum_{i=1}^{n} w_i = 1$. In the exemplified embodiment, these two requirements are enforced by normalization of the shape attribute weights of a vertex whenever new weights are added or existing weights are changed, e.g., during subdivision. The resulting vertex position $p_r$ is then obtained by a weighted averaging of the $SA_i$ positions $p(SA_i)$: $p_r = \sum_{i=1}^{n} w_i \, p(SA_i)$.

The definition of the shape attributes, their parametrization, the shape attribute weights and the optional minimum/maximum values contained in the vertex-based shape attribute information provide the necessary flexibility for appliance design in terms of the construction rules and potential user input. This design, e.g., including the definition of the shape attributes, their parametrization etc., is accomplished by the construction rules. However, the user has the ability to modify the definition, parametrization, etc. as needed, allowing for customization to meet specific requirements. Whereas the shape attributes and some of their parameters are global, i.e., identical for all initial vertices and/or cells of the control structure as well as for the vertices of the modified control structure created or modified during subdivision, the remaining parameters and the shape attribute weights are local, i.e., defined per vertex and/or cell.

There are two types of shape attributes (SAs):

   i. Subdivision-manifold SAs 111s employ subdivision schemes, i.e., they subdivide existing cells of the mesh, which includes insertion of new vertices. Subdivision schemes determine the position of such new vertices by weighted averaging of the positions of surrounding existing vertices. That is, a subdivision scheme includes a subdivision mask that provides a weight for surrounding vertices (e.g., weight 1/2 at vertex 301a and weight 3/8 at vertex 302d), as illustrated in FIG. 3. Examples for such subdivision schemes include linear subdivision 301 and Loop subdivision 302. Parameters for a subdivision-manifold SA include the weights of the mask. Additionally, a subdivision-manifold SA includes the typically vertex-based shape attribute weight that defines the contribution of the position proposed by the SA to the resulting position of the vertex. The subdivision mask is global in our example, i.e., identical for all vertices of the mesh, whereas the shape attribute weight is vertex-based.

   ii. Implicit-manifold SAs 111i employ scalar fields to define the position of a vertex. Here, an intermediate position IP for a vertex is required and used to select a respective position on the implicit manifold defined by (the vertex-based) isovalue information for the provided 3D scalar field(s). The intermediate position IP of a vertex can be obtained by weighted averaging (if more than one subdivision-manifold SA is involved) of the positions proposed by the subdivision-manifold SA(s). For example, this weighting can be accomplished according to the (normalized) shape attribute weights provided by the involved subdivision-manifold SAs. From that IP, the resulting point on the implicit manifold may be obtained by following the gradient of the scalar field(s), using point selection rules. The scalar fields are typically global, i.e., identical for all vertices, whereas the shape attribute weight and the isovalue(s) are typically vertex-based. Implicit-manifold SAs are particularly useful when their scalar field(s) represent distance fields (i.e., scalar fields that for each point of their domain encode the shortest distance to a given geometry), which enables to ensure that certain vertices maintain a prescribed distance from another geometrical object, e.g., from the oral anatomy according to the three-dimensional representations.

In one embodiment, the distance fields for implicit-manifold SA are signed, i.e., they store for each point in their domain the signed shortest distance to a geometry (mesh), with regions residing within the "interior" of the geometry exhibiting negative distance values, and regions residing within the "outside" of the geometry exhibiting positive distance values. If the geometry is provided by means of surfaces (i.e., not volumetric), the orientation (i.e., inside/outside information) of the surface geometry is provided by surface normals, which can be provided for each vertex (or cell) by a vector that points to the outside.

FIG. 4 illustrates the influence of a signed distance field, compared to an unsigned distance field. In drawing 231, a surface geometry (solid curve, 231-s) is illustrated and its unsigned distance field 231-1 is indicated with distance isovalue 1 mm (dashed curves), together with a mesh that is to be subdivided, comprising the two vertices 231-2 and 231-3 and a single cell illustrated by the straight line connecting these vertices. Both vertices have a shape attribute weight of 1 for the distance field-based implicit-manifold SA with isovalue (distance) 1 mm. Thus, the new vertex after subdivision will be located at a position with distance field value of 1 mm. The intermediate position IP 232-1 is obtained (according to linear subdivision), and, in case of the unsigned distance field in drawing 232, the hybrid subdivision vertex 232-2 resulting from the PSR is located "inside" the surface geometry, whereas for the signed distance field 233-1 in drawing 233, the resulting vertex 233-2 is located "outside", as aimed for.

In more detail, drawing 231 illustrates a surface (solid curve 231-s) with unsigned distance field and isovalues (dashed curves) with isovalue 1 mm. The subdivision-manifold SA proposes a new vertex 232-1 "inside" the surface 231-s. Obtaining the position of the new vertex on the isosurface using PSR for an unsigned distance field (drawing 232) would in this case lead to a final position 232-2 "within" the surface 231-s. For a signed distance field (drawing 233), on the other hand, the isovalues are negative when inside the surface. Thus, the final position 233-2 provided by the PSR is located "outside" of the surface, which in the case of an appliance might be required.

A skilled person may apply existing methods to compute unsigned distance fields for any type of geometry, and signed distance fields for closed surface geometry or volumetric geometry. To obtain such signed distance fields for non-closed surface meshes, an unsigned distance field can first be obtained with a typical grid size 0.1 mm or smaller (to ensure required accuracy). Given the typical representation of the oral anatomy and the requirement (as discussed below), that the oral anatomy representation 210 should not exhibit holes (except for an open boundary), the surface meshes of the jaw models are "open" in a vertical direction, from the lower jaw to the upper jaw, or in reversed vertical direction, from the upper jaw to the lower jaw, depending on whether the geometry under consideration is the upper or lower jaw. For example, to convert the unsigned distance field into the signed one, for each point of the distance field, a ray can be cast in both the positive and reversed vertical directions. If the ray intersects the surface at least once and the majority of the hits cross the surface from the interior (as determined from the surface normal), the point is classified as interior point, and the corresponding value of the unsigned scalar field is multiplied with -1. In the following of this example, all distance fields are considered to be signed distance fields.

The subdivision executed 1300 by HSD 120 transforms a current state (subdivision level) of the (modified) control structure (subdivision level 0 meaning that the modified control structure equals the control structure and the mesh equals the mesh 111pi of the CS) into a modified control structure (with mesh 111pm) of higher subdivision level. The subdivision is iterated, i.e., the output of a subdivision step is the input for the next subdivision step. The subdivision is iterated until a predefined termination condition is fulfilled 1520 to obtain a polygon mesh 111pf (e.g., 3-4 iterations, as defined by the user). Check function 125 tests if the termination condition TC is fulfilled. In not (N), the next subdivision iteration is performed by HSD 120. If yes (Y), the current mesh 111pm is taken as the final mesh 111pf.

A subdivision iteration in general includes two steps. Firstly, the subdivision is executed 1300 according to the at least one subdivision scheme to generate the modified mesh 111pm representation by splitting existing cells and adding new vertices with respective shape attribute information. Secondly, the new vertices (and possibly also the previously existing vertices) are positioned in 3D space by evaluating 1400, for each added new vertex, the respective shape attribute information to obtain the position of the respective vertex.

FIG. 3 shows two examples, where the new added vertices are indicated by points 301r and 302r (illustrated by white points) and where the new position is determined using a linear subdivision scheme 301 and the Loop 302 subdivision scheme, respectively. In the linear subdivision 301, the proposed position 301r is obtained by weighting the two existing vertex positions 301a and 301b with 1/2. In the Loop subdivision scheme 302, the proposed position 302r is obtained by weighting the existing vertex positions 302b and 302d with 3/8 and weighting the remaining two vertices 302a and 302c of the two involved triangles (according to the subdivision mask) with 1/8. The positions proposed by the subdivision-manifold SA(s) are subsequently weighted with the respective shape attribute weights and averaged accordingly, providing the intermediate vertex position IP. Notice that since the implicit-manifold SA(s) are not involved in IP, the shape attribute weights of the subdivision-manifold SA need to be normalized to sum up to 1 for this averaging. The positions proposed by the implicit-manifold SA(s) are then obtained from the IP using the PSR.

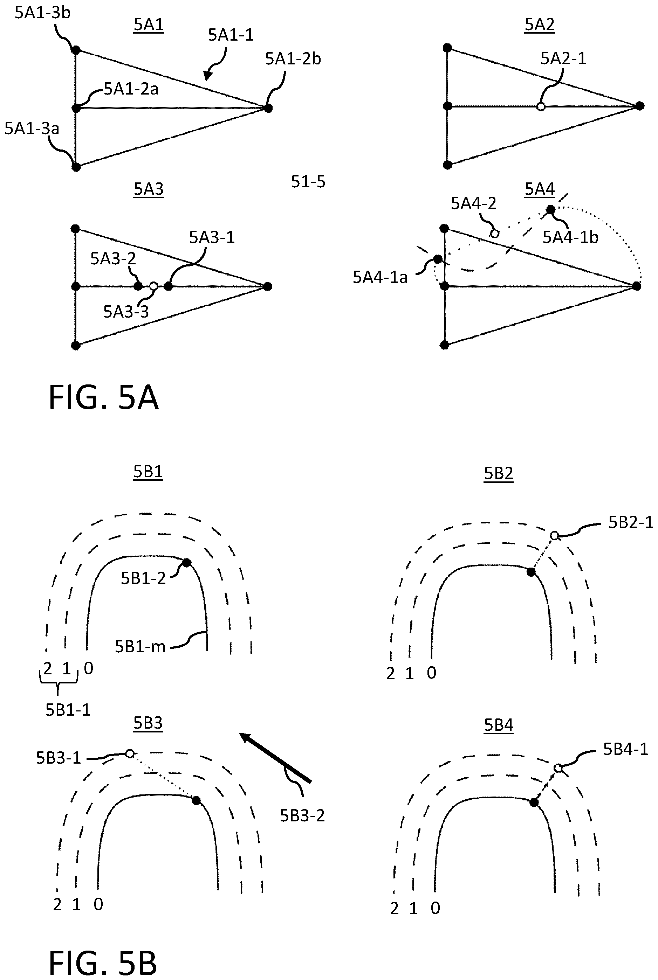

    i. FIG. 5A and FIG. 5B illustrate exemplary point selection rules PSR for determining the position proposed by the implicit-manifold SA for an newly generated vertex. FIG. 5A illustrates different point selection rules for a given input mesh 5A1-1, to obtain an intermediate position IP, illustrated by a white point. This intermediate position is used as the starting point for the point selection. Specifically, it is placed on the edge that connects the two existing vertices, labeled 5A1-2a and 5A1-2b. Points 5A1-3a and 5A1-3b, together with 5A1-2a and 5A1-2b, complete the cells, forming two triangles that share the edge containing the IP. Option 5A2: Linear interpolation of the positions of the existing vertices is employed to obtain the IP 5A2-1;

    ii. Option 5A3: The IP 5A3-3 is obtained as weighted combination of all the positions proposed by the subdivision-manifold SAs (e.g., each with SAW 0.5), position 5A3-1 proposed by the Linear subdivision scheme and position 5A3-2 proposed by the Loop subdivision scheme. The IP is the weighted averaged position of these obtained positions.

    iii. Option 5A4: The IP 5A4-2 is obtained by averaging of the two positions 5A4-1a and 5A4-1b, obtained by applying slope line-based PSR (indicated by finely dotted lines) to the two existing vertices 5A1-2a and 5A1-2b. In the shown example both vertices 5A1-2a and 5A1-2b have the same implicit-surface SA with the same isovalue, with the corresponding isosurface indicated by the dashed line, however this approach is also possible with different isovalues (in which case the points would reside on different isosurfaces).

FIG. 5B illustrates exemplary point selection rules to obtain a vertex position with a distance of 2 mm to a given mesh SB1-m including its isosurfaces with the isovalues 2 mm and 1 mm (illustrated by dashed curves 5B1-1 in drawing 5B1), and a given IP 5B1-2 with the implicit-surface SA (isovalue: 2mm, SAW: 1, and scalar field representing distance field to the surface mesh 5B1-m).

    i. Option 5B2: The final position 5B2-1 proposed by the implicit-manifold SA is the closest point on the isosurface.

    ii. Option 5B3: The final position 5B3-1 proposed by the implicit-manifold SA is obtained with bisection in a given direction 5B3-2 (e.g., in gradient direction).

    iii. Option 5B4: The final position 5B4-1 is obtained by integration of the gradient field until the isosurface is reached, with the endpoint representing the aimed point 5B4-1. The integration is similar to streamline (slope line) computation by solving an initial value problem using a numerical integration scheme, e.g., Runge-Kutta method.

The positions proposed by the subdivision-manifold SA and by the implicit-manifold SA are weighted by the original (not normalized) shape attribute weights to obtain the vertex position. When executing 1300 the subdivision, a new vertex additionally "inherits" the shape attributes from its "parents". That is, all shape attributes are also associated with the new vertex, with their global component (e.g., subdivision mask in case of subdivision-manifold SA, and scalar field(s) in case of implicit-manifold SA) being copied, and with their local (vertex-based) component (e.g., shape attribute weight in case of subdivision-manifold SA, and isovalue and shape attribute weight in case of implicit-manifold SA) being interpolated from the surrounding existing vertices and stored at the new vertex. In one embodiment, this interpolation is carried out according to the subdivision-manifold SA(s), i.e., the subdivision mask(s) are employed to the local (e.g., isovalue) data and the values proposed by the subdivision-manifold SA(s) are merged by weighted averaging according to the respect shape attribute weights. In another embodiment, the shape attribute weights $w_{i,g}$ of a newly generated vertex are obtained by linear interpolation of the corresponding weights ($w_{i,e1}$, $w_{i,e2}$) from the two existing vertices sharing the edge:

$$w_{i,g} = \left(w_{i,e1} + w_{i,e2}\right)/2$$

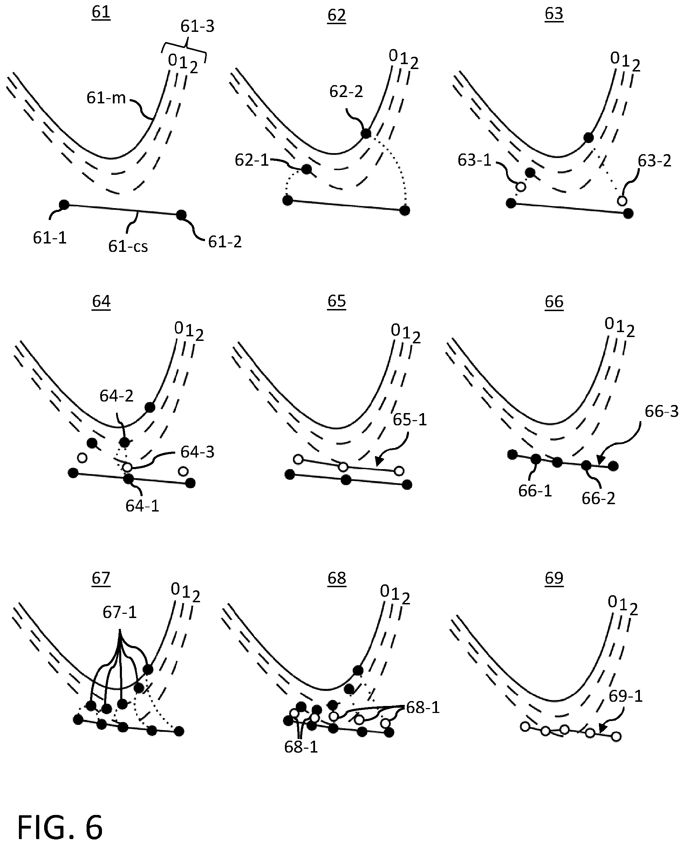

FIG. 6 illustrates an example in which a control structure 61-cs containing the two vertices V1 61-1 and V2 61-2, undergoes two iterations of subdivision. Two shape attributes are applied: one subdivision-manifold SA, which employs a linear subdivision, and one implicit-manifold SA, which is based on a distance field of a surface mesh 61-m indicated by isosurfaces 61-3 for isovalues 0 mm, 1 mm, and 2 mm. The control structure defines isovalue 2 mm for vertex V1 and isovalue 0 mm for vertex V2, together with shape attribute weights as shown in the Table 1. Vertex V1 is assigned the following shape attribute weights: 0.5 for linear subdivision and 0.5 for the implicit distance field (cf. Table 1), with a distance isovalue of 2 mm. Vertex V2 is assigned shape attribute weights of 0.9 for linear subdivision and 0.1 for the implicit distance field, with a distance isovalue of 0 mm.

For each (existing) vertex V1 and V2, a respective proposed point 62-1 (isovalue 2 mm) and 62-2 (isovalue 0 mm) is obtained on a respective isosurface according to the gradient field integration PSR (dotted curves). The final positions, 63-1 and 63-2, are then determined through weighted averaging of the respective position proposed by the subdivision-manifold SA (i.e., the vertices themselves) and the position proposed by the implicit-manifold SA, with respective weights. An intermediate position IP, V3 64-1, is obtained using linear interpolation between V1 and V2. In other words, an intermediate position 64-1 for the new vertex V3 is obtained by linear subdivision (thus, by linear interpolation of the positions of V1 and V2 and respective linear interpolation of the shape attribute weights and isovalues of V1 and V2). Applying PSR from 64-1 as starting point provides point 64-2 on the implicit surface at the respective interpolated isolevel 1. Weighted averaging of the two proposed positions 64-1 and 64-2 provides position 64-3 of the resulting vertex V3. In the example, V3 is assigned shape attribute weights of 0.7 for linear subdivision and 0.3 for the implicit distance field, with a distance isovalue of 1 mm (cf. Table 1). The implicit-manifold SA proposes position 64-2 which is obtained using respective PSR, and the final vertex 64-3 is generated in analogy to the points 63-1 and 63-2. Mesh 65-1 illustrates the state after the first iteration.

The second iteration step is performed analogously. New vertices V4 66-1 and V5 66-2 are obtained by applying subdivision to mesh 65-1, resulting in mesh 66-3. Vertex V4 is assigned analog to the first subdivision iteration the following shape attribute weights: 0.6 for linear subdivision and 0.4 for implicit distance field, with isovalue of 1.5 mm (cf. Table 1). Vertex V5 is assigned analog to the first subdivision iteration the following shape attribute weights: 0.8 for linear subdivision and 0.2 for implicit distance, with isovalue of 0.5 mm. Points 67-1 illustrate the positions proposed by the implicit-manifold SA for all vertices, while drawing 68 depicts the resulting state, including final vertices (illustrated by white points, 68-1) obtained by weighted averaging. Mesh 69-1 illustrates the output of the subdivision step. Table 1 lists the used shape attribute parameters.

Table 1 - Exemplary shape attribute information used for determining vertex positions.

|  | V1 | V4 | V3 | V5 | V2 |
|---|---|---|---|---|---|
| Subdivision-manifold SA weight | 0.5 | 0.6 | 0.7 | 0.8 | 0.9 |
| Implicit-manifold SA weight | 0.5 | 0.4 | 0.3 | 0.2 | 0.1 |
| Distance | 2 | 1.5 | 1 | 0.5 | 0 |

The result of the final hybrid subdivision level is the appliance geometry that is exported 1600 in this embodiment in stereolithography file format STL and is subsequently printed with a 3D printer.

**Part 2: Therapeutic Aspects**

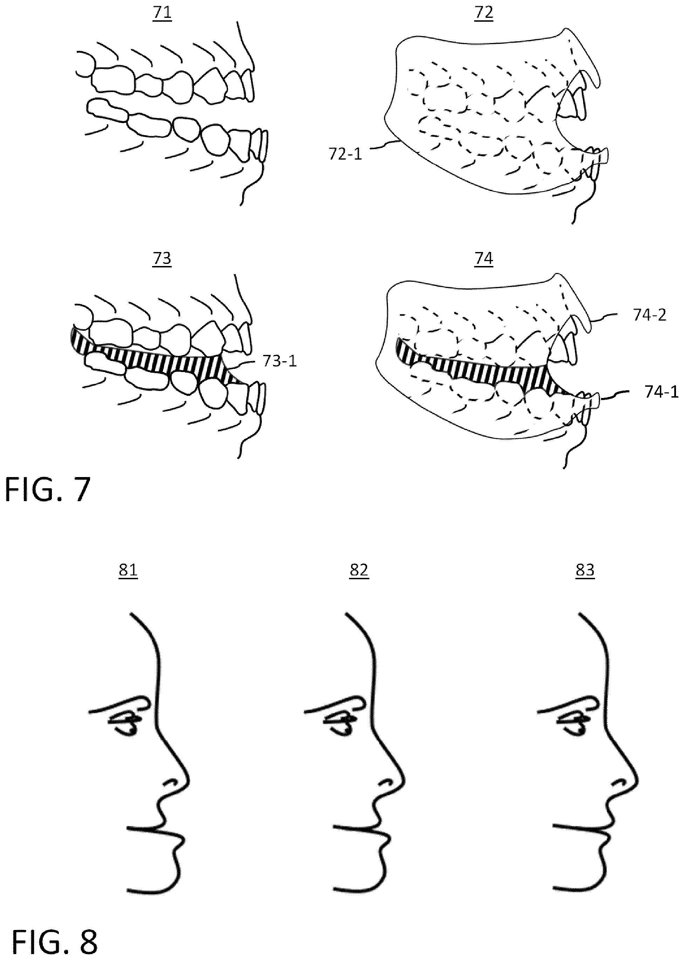

In the following, the automated production of a "functional regulator type 3" (FR3) orthodontic appliance using HS is described as an example. However, a person skilled in the art can easily apply the herein disclosed approach to other orthodontic appliances having elements which are similar or different from the FR3 elements. This includes other appliances like, e.g., the Activator, the Bionator, the Twin Block, the Space Maintainer, and the Oral Vestibular Trainer plate. The FR3 is a removable appliance for the growth-modification therapy of a class III- (prognathism) patient. FIG. 7 illustrates the application of an FR3 appliance to a patient's jaw parts. Drawing 71 illustrates a representation of the patient's oral anatomy including upper and lower jaw parts. Drawing 72 shows a side view of a buccal/vestibular part 72-1 of the FR3 appliance with the covered anatomy of the patient illustrated by dashed curves. Drawing 73 shows the occlusal-plateau part 73-1 of the FR3 appliance. Drawing 74 illustrates the complete FR3 appliance (where the occlusal-plateau part 73-1 and the front and back buccal/vestibular parts 72-1 form a single connected component), with contact 74-1 to front lower teeth but space 74-2 to front upper teeth to allow for adaptation of the anatomy and for growth.

FIG. 8 shows extraoral view examples of a class-III patient (prognathism) before (patient face profile 51), during (patient face profile 52), and after treatment (patient face profile 53). A person of skill in the art can apply the herein disclosed approach also to other appliances for patients with other dysgnathia and/or other misalignments.

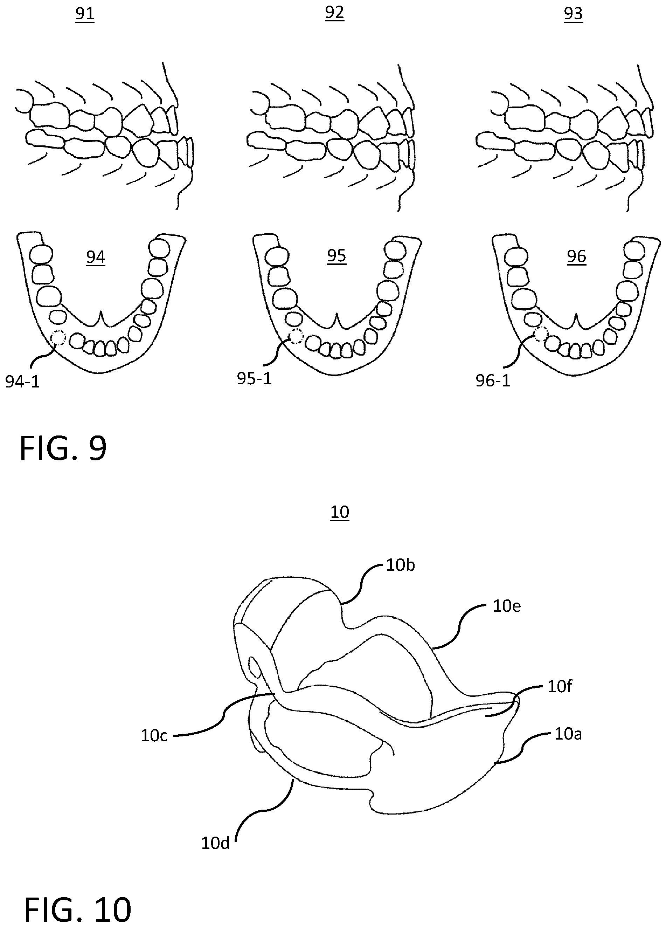

FIG. 9 illustrates three stages 91, 92, and 93 of a therapy of a class-III patient with an additionally misaligned tooth in three misalignment stages 94, 95, and 96. The three stages 91, 92, and 93 in the top row show the therapeutic effect of an FR3 appliance for treatment of prognathism which enables growth of upper jaw in sagittal (front) direction and redirects lower jaw growth in dorsal direction. The bottom row of FIG. 9 shows how the FR3 appliance can further affect the alignment of teeth. Before treatment starts (stage 94), a tooth 94-1 is misaligned. In stage 95, this tooth 95-1 already exhibits a reduced misalignment during therapy. After therapy, in final stage 96, only a negligible misalignment of the tooth 96-1 remains. The FR3 appliance is utilized, to promote maxillary (upper jaw) growth, mainly by retracting the soft tissue and by pulling the maxillary periosteum. On the other hand, it redirects mandibular (lower jaw) growth in dorsal direction, to prevent from sagittal anterior (forward) and transversal (lateral) growth of the mandible.

FIG. 10 illustrates an FR3 appliance 10 which may be generated by the herein disclosed approach. For the FR3, the CS generation comprises at least the generation of the following FR3 appliance elements:

a. the lower right and left (mandibular) buccal shields 10a,

b. the left and right occlusal bite blocks 10b,

c. the upper (maxillary) vestibular shield as a single circular shield (anterior 10c, lateral 10f),

d. the lower labial archwire 10d,

e. the transversal connector 10e.

Appliances of other appliance types can comprise similar or different appliance elements.

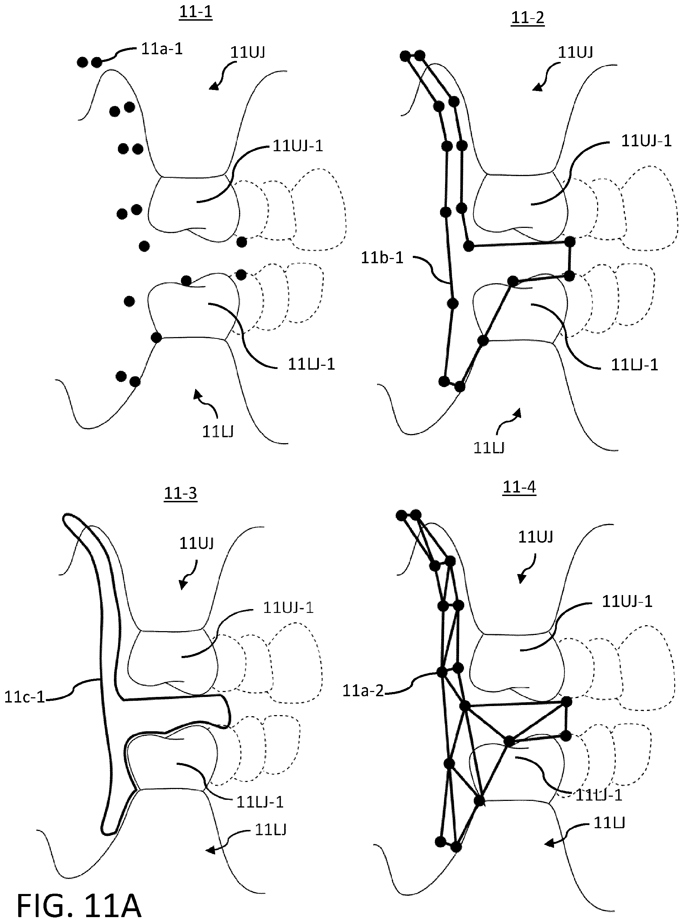

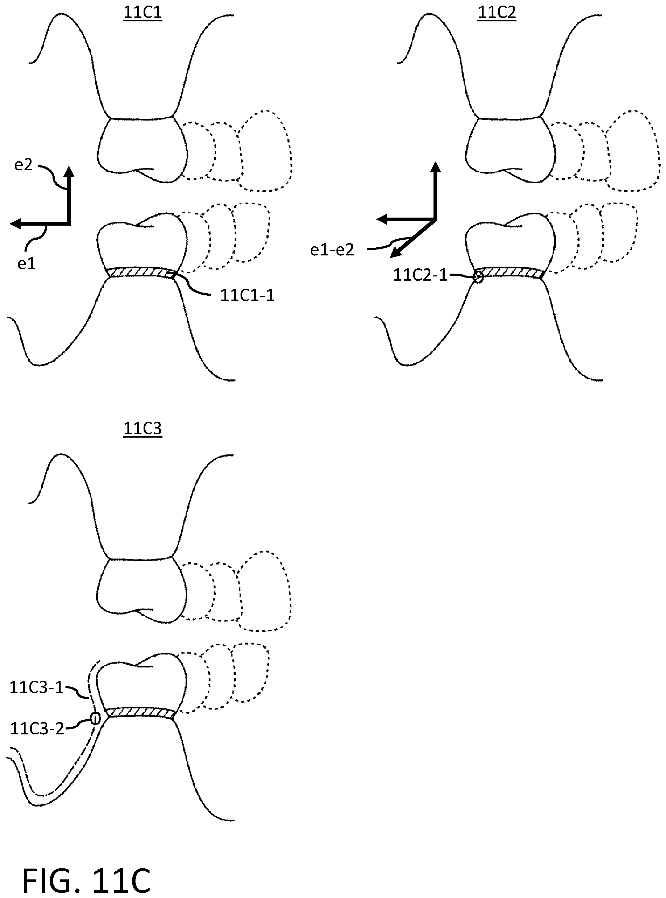

The geometry of the FR3 exhibits some key requirements that need to be fulfilled. The generation of a respective control mesh and the resulting geometry are illustrated in FIG. 11A (2D cross-section illustration, triangles illustrated by line segments). In drawing 11-1, control points (vertices of the control mesh) are indicated by black points (e.g., 11a-1). In drawing 11-2, a basic cross-section shape for a control mesh (11b-1) is generated as a polygon connecting the control points. An illustration of the patient's upper and lower jaw teeth is shown in FIG. 11A, where the control points P0 to P15 (illustrated by black points) are connected to form a basic cross-section shape for a control polygon mesh CM1. In drawing 11-3, a resulting hybrid subdivision manifold (11c-1) has been generated which results in a comparably smooth shape taking into account the constraints for the FR3 geometry. For example:

a. The upper vestibular shield is constructed as a single circular shield as described in literature (Roser C, Hodecker LD, Koebel C, Lux CJ, Ruckes D, Rues S, Zenthöfer A. Mechanical properties of CAD/CAM-fabricated in comparison to conventionally fabricated functional regulator 3 appliances. Sci Rep. 2021 Jul 19;11(1):14719. doi: 10.1038/s41598-021-94237-x. PMID: 34282228; PMCID: PMC8290040). It consists of a lateral and an anterior part. Close to the vestibular fold of the appliance, the vestibular shield has to intersect (penetrate) the 3D scan of the vestibular fold by a given depth (2 mm, adjustable by the user) to stimulate growth by periosteal tension, as described in literature (Koebel, C. F. & Lux, C. The functional regulator type 3 according to Fränkel-part 1. Kieferorthopädie 26(1), 33-43 (2012)). The rest (except for the transition region along the vestibular fold) of the upper part of the appliance needs to maintain a distance of 1.5-2.5 mm to the oral anatomy of the upper jaw 11UJ and upper jaw teeth 11UJ-1 in order to retract the soft tissue to generate freedom for maxillary growth. The vestibular shield as an element cannot only be used for the FR3 but also for other appliances, like, e.g., the Prognathism (Class III) Activator. It can also be used in a reversed manner for the lower jaw, like, e.g., for the functional regulator type 2 (FR2), the functional regulator type 1 (FR1) or for the functional regulator type 4 (FR4). As an integral part, in a modified manner, it can also be used for the buccal part of a Bionator. The upper vestibular shield can also be used in a modified version, e.g., for a Palatal Plate according to Castillo-Morales for orofacial regulation therapy to stimulate the upper and lower lip musculature.

b. The lower buccal shields of the FR3 are constructed with a tight fit to the anatomy of the lower jaw 11LJ and the teeth 11U-1 to redirect mandibular growth in dorsal direction and prevent from sagittal anterior growth of the mandible. In order to protect the patients from pressure points on teeth and soft tissue, the lower buccal shields are planned with a safety tolerance (distance) of 0.1 mm to the teeth and to the soft tissue. In posterior direction, the buccal shields end with the occlusal plateau. In anterior direction, the buccal shields are constructed in a curved shape exceeding the occlusal plateau by 3 mm in mesial direction. The buccal shields can also be used in a reversed manner for other orthodontic appliances. Examples include the FR1, FR2 or FR4.

c. The left and right occlusal bite blocks are constructed from the most back tooth in the posterior direction and should cover the canine tooth in anterior direction. This range may be adjusted by the system in response to respective user inputs. On their upper side (toward the maxilla), the occlusal blocks are planarly shaped in order to allow for maxillary sagittal and transversal growth. On their lower side (toward the mandible), the bite blocks tightly fit the lower jaw teeth (11U-1), to inhibit mandibular sagittal and transversal growth. The vertical thickness of the occlusal bites depends on the vertical distance between the upper and lower jaw, which is determined by the bite relation scan provided by the user. The bite blocks can be used for multiple other orthodontic appliances like, e.g., the Activator, the Bionator, or in a modified version for, e.g., the Twin Blocks.

d. The thickness of the upper vestibular and the lower buccal shields may be set to a default value of 2 mm (also the thickness may be adjusted in response to respective user inputs).

**Part 3: Implementation Aspects**

In order to generate a functional regulator type 3 (FR3) or other orthodontic appliance, according to an embodiment, the following requirements are to be fulfilled.
To adequately generate the CS in this embodiment for creating the appliance 280 (e.g., FR3 appliance 10), the surface-based input scan 210-after any preprocessing steps-satisfies certain criteria. These criteria may be classified as either geometrically restrictive or therapeutically restrictive:

a. The surface mesh should be free of any holes, except for a single boundary.

b. The surface mesh should not contain overlapping areas.

c. The surface mesh should be segmented, with tooth and jaw vertices/cells clearly distinguished.

d. The surface mesh should be labeled, assigning each vertex/cell to its corresponding tooth or jaw region.

e. The surface mesh should include all relevant oral anatomy components that are required for the respective appliance. For example, in the case of the FR3, the vestibular folds must be present. Other appliance types typically do not need a representation of the vestibular fold.

f. The surface mesh should not include artefacts.

g. The teeth should be labeled in the correct order.

h. The patient should meet the therapeutic prerequisites for receiving the appliance, including a predefined minimum number of teeth. For example, for the FR3 one tooth per quadrant must be present.

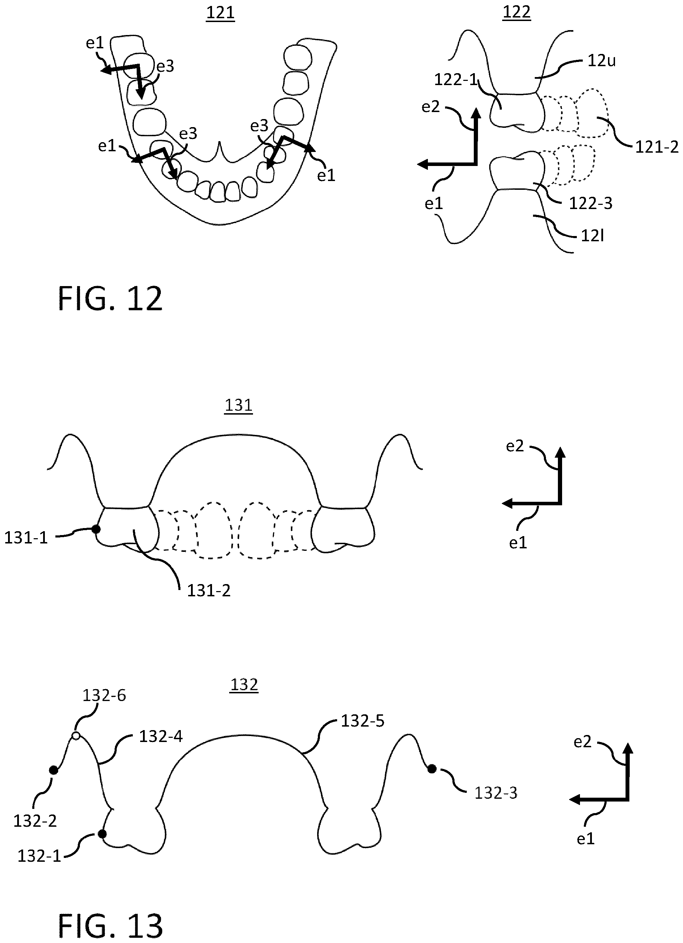

If one or more criterion is not fulfilled, the CS and/or the subdivided mesh may be generated incorrectly. The user can adjust the CS or the modified CS in such cases.
In order to orientate in 3D-space, a coordinate system is to be obtained. FIG. 12 depicts the orientation of unit vectors e1 ("outside direction"), e2 ("up direction"), and e3 ("next front tooth direction") of the coordinate system. A top view of a lower jaw 121 is shown with a corresponding cross-section 122. Vector e3 is local, determined for each tooth, pointing toward the next tooth in mesial direction. Vector e1 is also local, determined for each tooth, pointing outward in the buccal direction. Vector e2 is a global direction, pointing from the lower jaw 12l toward the upper jaw 12u. For easier depiction, the upper jaw is illustrated such that upper and lower teeth align in the cross-section. In reality, those cross-sections differ both in position and orientation because the respective upper and lower teeth are typically not aligned. However, this does not impact vector e2 due to its global definition.

In more detail, e2 is a global coordinate axis that can be obtained by performing a principal component analysis PCA for the upper and lower jaw and obtaining the direction of the PCA component with the least variance. One of the resulting directions is multiplied with -1 if their dot product is negative, with subsequent averaging of the two vectors and normalization. Finally, the resulting vector is multiplied with -1 if it does not point "upward", providing e2. The vector e3 is the direction from the tooth (if available, the previous tooth) to the next tooth, skipping potentially missing teeth. The direction e1 is the cross product of e2 and e3 (multiplied with -1 if on the right jaw side). Additional directions obtained by the PCA include the "front" direction, as the component with the second smallest variance, and the "side" direction as the component with the largest PCA variance. In case of severe anomalies in the anatomy, the therapist can swap/adjust the axes.

Combinations of directions are denoted as ex,y. For example, e2,-1, defines the unit vector obtained by adding -e1 to e2 with subsequent normalization.

For each tooth, its center of mass (COM), its gingival vertices (GV), and vestibular fold point (VFP) are computed. The GV are all vertices of a tooth's 3D scan part that have a maximum distance (e.g., 0.1 mm, as the used tolerance of this appliance, given that the resolution of the mesh of the oral anatomy is high enough) to the soft tissue. FIG. 13 illustrates how the VFP is determined for a tooth. Firstly, the most outer vertex (MOV) 131-1 (of the left tooth 131-2 in drawing 131) in e1-direction is determined, which is obtained by projecting all vertices of the tooth 131-2 on the e1-axis and selecting the vertex with largest e1-coordinate. Then, a plane is constructed that contains the MOV and the two vectors e1 and e2. This plane intersects with the geometry of the soft tissue and teeth, providing an anatomy profile curve (APC) 132-4, 132-5 illustrated in drawing 132. In an open mesh with no holes, the point on the APC closest to the MOV 132-1 represents a splitting point, splitting the APC into two curve parts. One part 132-5 is located in the inner of the mouth with point 132-3 as endpoint, and one part 132-4 located outside of the mouth and ending in point 132-2. In order to obtain the correct segment, both endpoints 132-2 and 132-3 are projected on the e1-axis and the curve with endpoint 132-2 with the larger e1-coordinate is selected. So, only the vertices of the curve 132-4 are projected on the e2-axis and the vertex with the smallest e2-coordinate (for teeth in the lower jaw (maxilla)) or the largest e2-coordinate (for teeth in the upper jaw) is determined, providing the VFP 132-6 as shown in drawing 132.

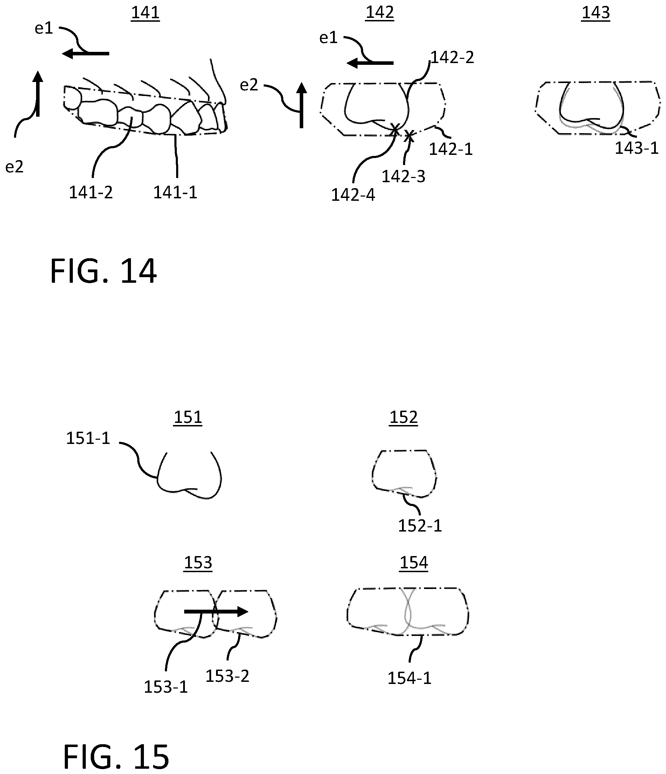

The bite block's upper jaw side ("occlusal plateau") should feature a smooth surface at its top with minimal elevations to facilitate unrestricted maxillary growth. This is accomplished by constructing a jaw convex hull (JCH) that provides sufficient space for the jaw to expand. A convex hull of a set of vertices forms the volume of all points that can be generated by nonnegative convex combination (weighted averaging) of these points. The subdivision of the upper part of the occlusal plateau is then based on the JCH rather than the jaw and teeth themselves. FIGs. 14 to 16A illustrate generation of such convex hull (CH) for the occlusal plateau according to an embodiment.

a. To create the JCH for the upper jaw, two complete convex hulls are generated, one for each half of the jaw (left and right) over all teeth on that half. A person skilled in dentistry typically uses the term quadrant which refers to one of the four areas of the dentition, that are divided into two halves by the midlines of the upper and lower jaw (upper left, upper right, lower left, and lower right). Specifically, teeth 11 to 17 (or alternatively teeth 51 to 55) (dental notation according to FDI World Dental Federation notation) form the first convex hull, while teeth 21 to 27 (or alternatively 61 to 65) constitute the second convex hull for all teeth of the upper jaw (performed separately for left and right part of upper jaw). FIG. 14 drawing 141 illustrates one of those convex hulls 141-1.

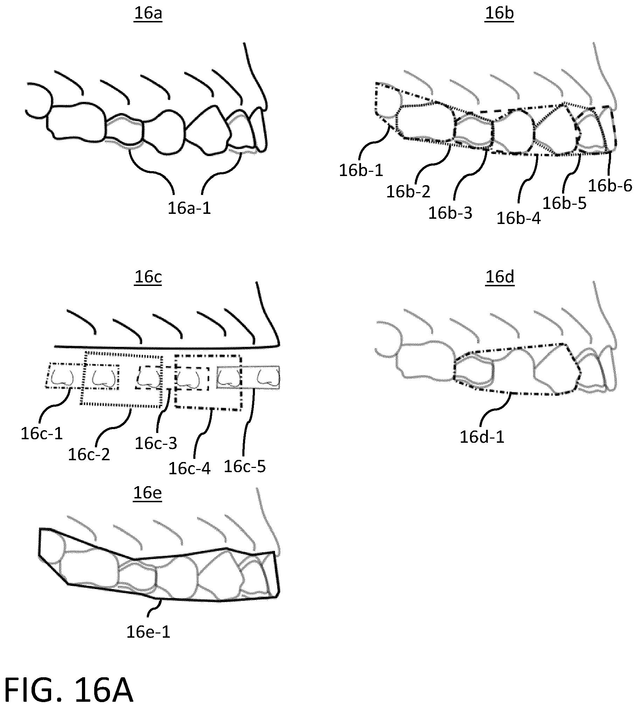

b. To allow teeth that are not (fully) erupted to continue erupting, the position of a respective tooth is assessed. A cross-sectional plane is defined for each tooth by its center of mass (e.g., tooth 141-2) and the two reference axes, e1 and e2. This plane intersects both the tooth 141-2 and the corresponding complete convex hull 141-1, resulting in a cross-section of the tooth 142-2 and a cross-section of the convex hull 142-1, as shown in the drawing 142. To determine the distance between the later occlusal plateau and the respective tooth, the projection of each point of the cross-section of tooth 142-2 and the projection of each point of the cross-section of the convex hull 142-1 onto the e2 axis are examined. Specifically, the lowest point (i.e., the point with the smallest coordinate along the e2 axis) is identified for both the tooth (point 142-4) and the convex hull (point 142-3) cross-section. A threshold distance (e.g., 1.5 mm) is established. If the absolute difference of the e2-coordinate of those two points exceeds this threshold, it indicates that the tooth requires additional space for extrusion. In this case, a copy 143-1 of all vertices of the tooth is created and shifted in negative e2-direction, according to the difference. In other words, if the distance is larger than the threshold, the tooth is copied to a position shifted by the distance in -e2-direction. Such copies are also shown by gray lines 16a-1 in drawing 16a of FIG. 16A. To guarantee the necessary jaw growth for the FR3, the final convex hull for each tooth is constructed not only using the original tooth points but additionally incorporating the shifted copies, as illustrated in FIG. 15. The generation of the occlusal plateau based on convex hulls ensures enough room for movement and growth for the jaw and teeth. For example, for tooth 151-1 in drawing 151, the convex hull 152-1 in drawing 152 is generated. The generated convex hull is copied and shifted in the direction of arrow 153-1 by an anticipated maximum growth distance (e.g., 3 mm, for the aimed duration of the therapy), to the position of the shifted copy 153-2 in drawing 153. Employing the convex hull operation on the union of the convex hulls 152-1 (original convex hull) and 153-2 (shifted copy) provides a new convex hull 154-1 in drawing 154 that keeps space in the occlusal plateau to enable movement of teeth due to change of the oral anatomy during treatment. In this embodiment, each tooth (along with its shifted copies) is replicated three additional times. These replications are then shifted by a specified distance (e.g., 3 mm) in three directions: one replication is shifted sagittally, another transversally, and the final copy is shifted diagonally, combining all three shifted copies (e.g., by using a Boolean union operator) with the described method illustrated in FIG. 15, hereinafter referred to as the complete tooth convex hull CTCH.

c. FIG. 16A drawing 16b illustrates pairwise convex hulls 16b-1 to 16b-6. They are created by generating a convex hull over two neighboring CTCHs. For better visualization, the pairwise convex hulls 16c-1 to 16c-5 are simplified illustrated in drawing 16c. Drawing 16d illustrates a pairwise hull 16d-1 over a missing tooth. The aggregate 16e-1 of all pairwise convex hulls constitutes the jaw convex hull (JCH).

For the FR3 configuration, the absence of teeth exerts the greatest influence on the occlusal plateau. In the case of the upper jaw, the dental arch must align with the convex hull, while the lower jaw must adequately occupy the resulting gap. In both scenarios, applying the same rules as for the existing teeth is deemed sufficient, necessitating the determination of the precise positioning of the relevant points. HSD 120 has an inherent self-correction capability which allows the control points to be determined by linear interpolation between the control points of the adjacent teeth. In situations where multiple teeth are missing, the interpolation process can be weighted accordingly (e.g., a 1/3 to 2/3 ratio for two missing teeth). If no previous tooth is available, the control points can be roughly obtained by using an extrapolation between the next and second next teeth.

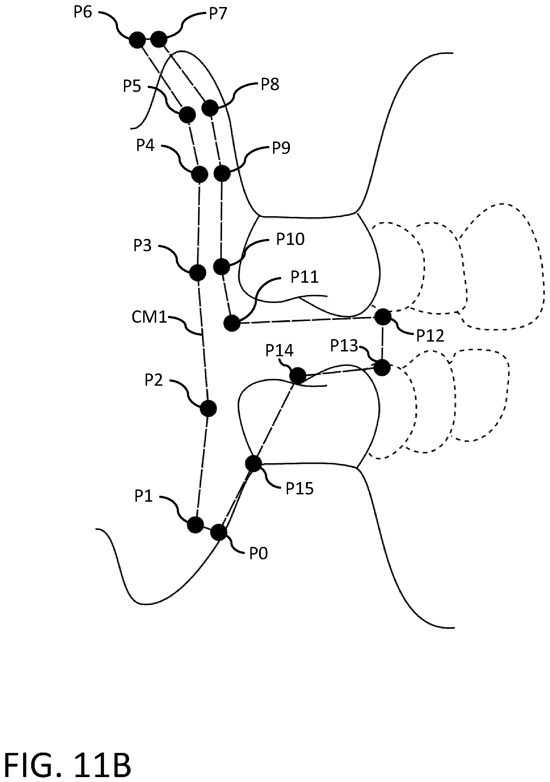

The following describes the generation of the CS for the buccal shields 10a (cf. FIG. 10), the occlusal bite blocks 10b, and the lateral part of the upper vestibular shield 10c, by referring to the numbering of the control points P0 to P15 as shown in FIG. 11B. In an example embodiment, a set of 16 vertices (control points) is computed for each tooth pair (cf. FIG. 11A, upper and lower jaws 11UJ, 1U, e.g., teeth 11 and 41) to fulfill the given requirements. In other parts of the appliance or other appliances (including monomaxillary appliances), the control points are calculated differently, depending on the specific requirements. For some sections, the control points are determined individually for each tooth, while other areas follow separate construction rules tailored to their functionality. These variations ensure that the appliance adapts precisely to the intended design and structural needs. FIG. 11A illustrates the cross-section of an example tooth pair 11UJ-1 | 11U-1. The distance values used in the example embodiment are exemplary only, and may deviate from the example values used in the below sections. Two subdivision-manifold SA (SMSA) are used for the modeling: linear subdivision (SMSA1) and Loop subdivision (SMSA2). In this context, linear subdivision (SMSA1) does not alter existing vertices, whereas Loop subdivision (SMSA2) does. Additionally, three implicit-manifold SA (IMSA) are used for the modeling, with the scalar field being a distance field for the complete model (the combination/union of both jaw models and all teeth models) (IMSA1), a distance field for the complete lower model (jaw and teeth) (IMSA2), and a distance field to the JCH (IMSA3). In the following example, points P0 to P15 refer to FIG. 11B.

a) P15: The outermost point 11C2-1 of the GV 11C1-1 of the lower jaw tooth in e1-e2-direction is obtained, then PSR is applied with an isovalue of 0.1 mm on the distance field 11C3-1 for the complete lower model (lower jaw and teeth), resulting in the position 11C3-2.

i. SMSA1: SAW 0

ii. SMSA2: SAW 0

iii. IMSA1: SAW 0

iv. IMSA2: SAW 1; isovalue 0.1 mm; Distance field for the complete lower model.

v. IMSA3: SAW 0

b) P0: The distance between P15 and the lower VFP is obtained. If the distance is 2.5 mm or larger: P0 is P15 shifted by the maximum distance of 2.5 mm toward the lower VFP. If the distance between P15 and the VFP is less than 2.5 mm, the shift is reduced to that distance, but no less than 0.5 mm, and then PSR is applied with an isovalue of 0.1 mm on the distance field isosurface for the entire lower model.

    i. SMSA1: SAW 0

    ii. SMSA2: SAW 0

    iii. IMSA1: SAW 0

    iv. IMSA2: SAW 1; Value 0.1 mm; Distance field for the complete lower model.

    v. IMSA3: SAW0

c) P1: P0 is obtained, then the PSR is applied with an isovalue of 2.1 mm on the distance field for the complete model.

    i. SMSA1: SAW 0

    ii. SMSA2: SAW 1; Loop subdivision.

    iii. IMSA1: SAW 0

    iv. IMSA2: SAW 0

    v. IMSA3: SAW 0

d) P11: The outermost point of the upper tooth in $e1,-2$-direction is obtained, then the PSR is applied with an isovalue of 0.1 mm of on the JCH.

    i. SMSA1: SAW 0

    ii. SMSA2: SAW 0

    iii. IMSA1: SAW 0

    iv. IMSA2: SAW 0

    v. IMSA3: SAW 1; Value 0.1 mm; Distance field for the JCH.

e) P12: The outermost point of the upper tooth in $-e1$-direction is projected onto a plane defined by the outermost point in $-e2$-direction and the normal $e2$.

    i. SMSA1: SAW 0

    ii. SMSA2: SAW 0

    iii. IMSA1: SAW 0

    iv. IMSA2: SAW 0

    v. IMSA3: SAW 1; Value 0.1 mm; Distance field for the JCH.

f) P13: The outermost point of the lower tooth in $e-1$-direction is obtained, then the PSR is applied with an isovalue of 0.1 mm on the distance field for the complete model.

    i. SMSA1: SAW 0

    ii. SMSA2: SAW 0

iii. IMSA1: SAW 0

iv. IMSA2: SAW 1; Value 0.1 mm; Distance field for the complete lower model.

v. IMSA3: SAW0

g) P14: the linear interpolation of P11 and P12 is obtained, then the PSR is applied with an isovalue of 0.1 mm on the distance field for the complete lower model.

i. SMSA1: SAW 0

ii. SMSA2: SAW 0

iii. IMSA1: SAW 0

iv. IMSA2: SAW 1; Value 0.1 mm; Distance field for the complete lower model.

v. IMSA3: SAW0

h) P2 is the outermost point of the lower tooth in e1-direction is obtained, then the PSR is applied with an isovalue of 4.5 mm on the distance field for the complete model.

i. SMSA1: SAW 0

ii. SMSA2: SAW 1; Loop subdivision.

iii. IMSA1: SAW 0

iv. IMSA2: SAW 0

v. IMSA3: SAW 0

i) P10: The outermost point of the upper tooth in e1-direction is obtained, then the PSR is applied with an isovalue of 3 mm on the distance field for the complete model.

i. SMSA1: SAW 0

ii. SMSA2: SAW 1; Loop subdivision.

iii. IMSA1: SAW 0

iv. IMSA2: SAW 0

v. IMSA3: SAW 0

j) P3: P10 is obtained, then the PSR is applied with an isovalue of 5 mm on the distance field for the complete lower model.

i. SMSA1: SAW 0

ii. SMSA2: SAW 1; Loop subdivision.

iii. IMSA1: SAW 0

iv. IMSA2: SAW 0

v. IMSA3: SAW 0

k) P8: The outermost point of the GV in e1,2-direction moved 2/3 of the distance toward the vestibular fold, then the PSR is applied with an isovalue of 2.1 mm on the distance field for the complete model.

    i. SMSA1: SAW 0

    ii. SMSA2: SAW 0.7; Loop subdivision.

l) IMSA1: SAW 0.3; minimum value 2.1 mm; Distance field for the complete model.

    i. IMSA2: SAW0

    ii. IMSA3: SAW0

m) P9: The outermost point of the GV in e1,2-direction moved 1/3 of the distance toward the vestibular fold, then the PSR is applied with an isovalue of 2.6 mm on the distance field for the complete model.

    i. SMSA1: SAW 0

    ii. SMSA2: SAW 0.3; Loop subdivision.

    iii. IMSA1: SAW 0.7; Value 2.6 mm; Distance field for the complete model.

    iv. IMSA2: SAW 0

    v. IMSA3: SAW 0

n) P4: P9 is obtained, then the PSR is applied with an isovalue of 4.6 mm on the distance field for the complete model.

    i. SMSA1: SAW 0

    ii. SMSA2: SAW 0.3; Loop subdivision.

    iii. IMSA1: SAW 0.7; Value 4.6 mm; Distance field for the complete model.

    iv. IMSA2: SAW 0

    v. IMSA3: SAW 0

o) P5: P8 is obtained, then the PSR is applied with an isovalue of 4.1 mm on the distance field for the complete model.

    i. SMSA1: SAW 0

    ii. SMSA2: SAW 0.7; Loop subdivision.

    iii. IMSA1: SAW 0.3; Value 4.1 mm; Distance field for the complete model.

    iv. IMSA2: SAW 0

    v. IMSA3: SAW 0

p) P7: VFP moved 2 mm in e2-direction.

    i. SMSA1: SAW 0.3; Linear subdivision.

    ii. SMSA2: SAW 0.7; Loop subdivision.

    iii. IMSA1: SAW 0

iv. IMSA2: SAW 0

v. IMSA3: SAW 0

q) P6: 13A-P7 moved 2 mm in e1-direction.

i. SMSA1: SAW 0

ii. SMSA2: SAW 1; Loop subdivision.

iii. IMSA1: SAW0

iv. IMSA2: SAW0

v. IMSA3: SAW0

In addition to the above shape attribute information containing prescribed miminum value of 2.1 mm distance in IMSA1, additionally employing corresponding maximum value limitation can be advantageous, for example, to prevent artefacts in case of non-conforming 3D scan data.

In the case of cell-based shape attributes, the components of a shape attribute that are quantitative, i.e., subject to interpolation (such as the isovalues of implicit-manifold SA), can be converted from cell-based representation to vertex-based representation. This can be accomplished according to the approach widely used in computer graphics for converting face-based surface normals to vertex-based surface normal. The remaining components that are not quantitative (such as the PSR of implicit-manifold SA), typically remain in cell-based representation, with the advantage of simplified inheritance during subdivision.

In short, in the above example, 16 points are computed for every tooth pair consisting of corresponding teeth in the upper and lower jaw. In case of missing upper teeth, the appliance should still be formed around the convex hull, therefore P10, P11 and P12 are obtained by interpolation (extrapolation) of the adjacent teeth. In case of missing lower teeth, the appliance should still be formed around the distance field of the complete lower model, therefore P13, P14, P15 are obtained by interpolation (extrapolation) of the adjacent teeth. So a tooth pair can also be created with one or two missing teeth.

Analog to this, there are control points for lower labial archwire, the transversal connector, and upper vestibular shield.

At transition areas, e.g., between points P0 and P1, the "inheritance" of SAW with linear interpolation may cause artifacts. To address this, an additional rule for the determination of SA of newly generated vertices is implemented. Implicit-manifold SA are only inherited to the new vertices when the SAW of both existing vertices are nonzero. If either SAW is zero, the corresponding SAW of the newly generated vertex is zero. If this rule is applied, the sum of the SAW might not be 1 anymore and therefore all SAW must be normalized. In this implementation, if all surface SAWs are zero, the Loop subdivision scheme is weighted one.

Then triangle faces (cells) are generated to obtain a closed mesh.

i. The most anterior and most posterior tooth pairs on both sides enclose the surface by connecting all control points as illustrated in FIG. 11A drawing 11-4: e.g., (P0, P1, P2), (P0, P2, P15) etc.

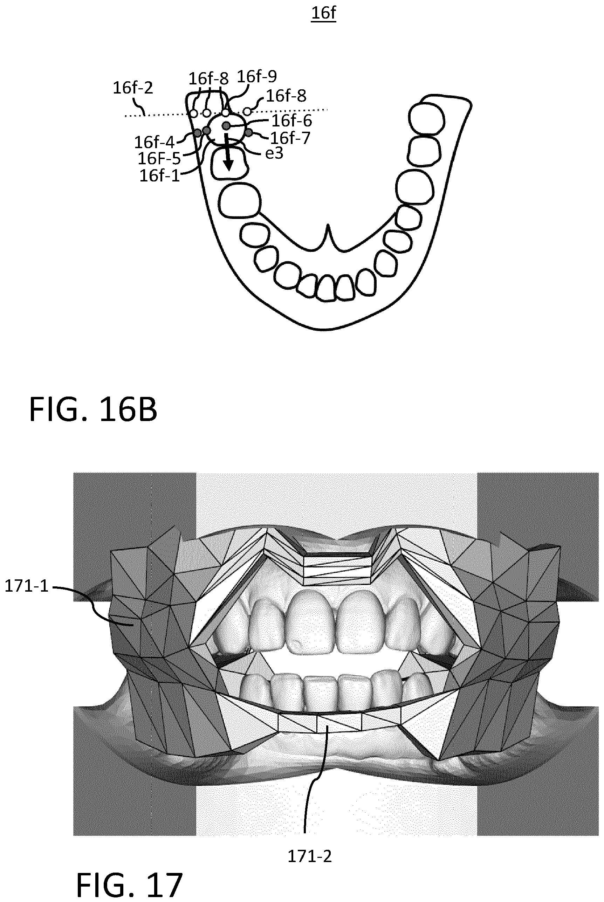

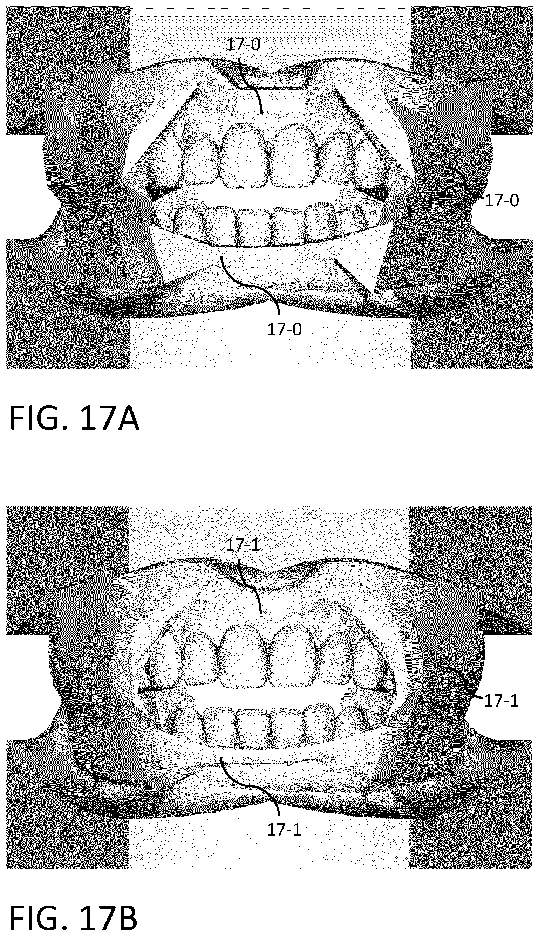

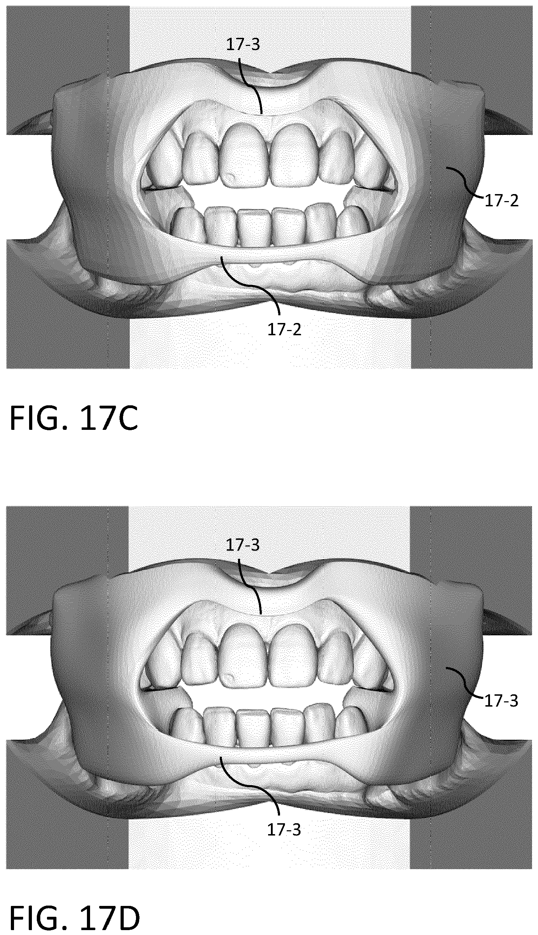

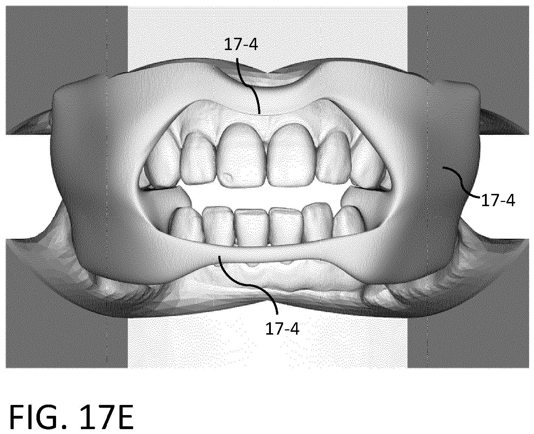

ii. As shown in FIG. 17, the faces 171-1 connecting the tooth pairs are constructed between two neighboring control points on each side: for P0 and P1 (P0, P1, P1'), and (P1', P0', P0), or more general configuration involves tooth pair 1 with points P(i) and P(i+1) and tooth pair 2 with points P'(i) and P'(i+1). These pairs form the resulting faces: (P(i), P(i+1), P'(i+1)), and (P'(i+1), P'(i), P(i)). To close the volume, the last point will connect with the first point to close the volume.

FIG. 11A illustrates the subdivision process for the cross-section of the described appliance element. Drawing 11-1 illustrates the control points with black points (e.g., point 11a-1), drawing 11-2 illustrates the control mesh CM 11b-1 with thick black lines, and drawing 11-3 illustrates the subdivided mesh 11c-1 with thick black lines.

Since the control points are often computed using the e1- and e2-directions, they are typically located in the vicinity of a plane defined by these vectors and the point with the largest coordinate in the e1-direction. FIG. 16B illustrates exemplary control points of FIG. 11B: P0 (16f-4), P15 (16f-5), P14 (16f-6), and P13 (16f-7). For the remaining points, due to the usage of SA in the HSD, a minimal impact on the process is ensured. However, for the rearmost tooth (e.g., 16f-1), only partial coverage may occur, for instance, by the bite blocks, resulting in a FR3 appliance only partially enclosing this tooth.

To achieve full enclosure, the CS vertices (e.g., 16f-4 to 16f-7) of the last tooth pair are moved to the plane 16f-2 (illustrated by dotted line) defined by the outermost point 16f-9 of the teeth in -e3-direction and vector e3 as a normal of said plane, resulting in the points 16f-8.

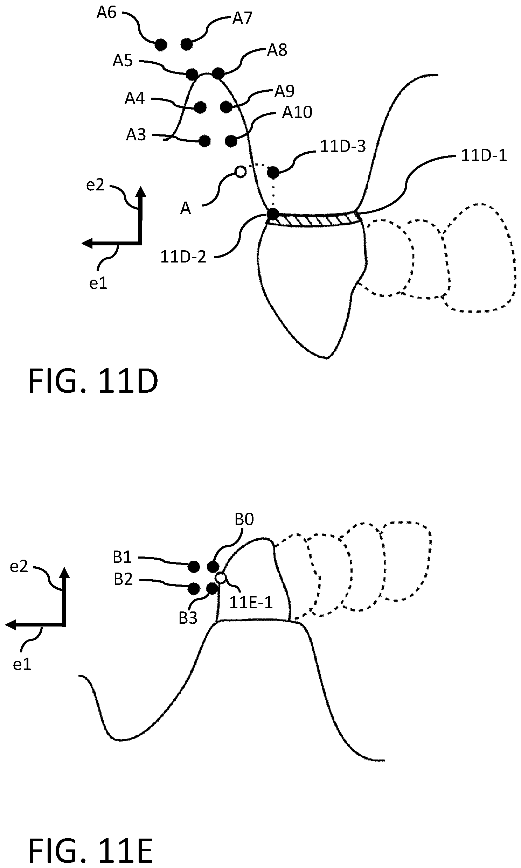

The upper (maxillary) anterior vestibular shield 10c (cf. FIG. 10) should be created with a maximum height of 10 mm and a minimum height of 4 mm. It has functionality analogous to the buccal part of the vestibular shield 10a and therefore uses a modified version of the eight corresponding upper part control points P3 to P10 (cf. FIG. 11B) of that appliance element, naming them A3 to A10 for element 10c. A referential point, point A (cf. FIG. 11D) is computed. The outermost point 11D-2 of the GV of the upper jaw tooth in e1,2-direction is shifted 3 mm in e2-direction, resulting in point 11D-3, then the PSR is applied with an isovalue of 2.6 mm on the distance field for the complete model, resulting in point A. From a construction perspective, points A6 and A7 are identical as P6 and P7. Now three different cases are considered for creation:

a. The distance between point A and A7 is larger than 10 mm: A10 is set 10 mm in negative e2-direction from point A7, and then the PSR is applied with an isovalue of 2.6 mm on the distance field for the complete model. The other points are then created as discussed before with FIG. 11B.

b. The distance between point A and A7 is larger than 4 mm and smaller than 10 mm: A10 is set to point A. The other points are then created according to the method as discussed before.

c. If the distance between point A and A7 is smaller than 4 mm, A10 shall be shifted to align with point A. Furthermore, A7 is shifted by 4 mm in the e2-direction to prevent from pressure on the labial frenulum. This adjustment is based on prior experience and research findings, highlighting the importance of precise modeling for maintaining mechanical integrity (Roser C, Hodecker LD, Koebel C, Lux CJ, Ruckes D, Rues S, Zenthöfer A. Mechanical properties of CAD/CAM-fabricated in comparison to conventionally fabricated functional regulator 3 appliances. Sci Rep. 2021 Jul 19;11(1):14719. doi: 10.1038/s41598-021-94237-x. PMID: 34282228; PMCID: PMC8290040). On this point the PSR is applied with an isovalue of 2.5 mm on the distance field for the entire model. The other points are then created as discussed before.

To avoid pressure points on the median labial frenulum, the control points of the most inner front teeth (11, 21) need to be lowered. In that case, before the previously described steps are carried out, point A is now the selected GV and A7 is set 15 mm in the e-2-direction (from the VFP), and then the PSR is applied with an isovalue of 2.6 mm on the distance field for the complete model.

The lower labial archwire 10d may use four control points per lower tooth that are not included in the buccal shield/bite block segment, as illustrated in FIG. 11E. The outermost point 11E-1 of the tooth in the e1-direction is defined.

a. B0: 11E-1 may be offset by a distance (e.g., 1.5 mm) in the e2-direction. This offset can be altered by the user if desired. On this point the PSR is applied with an isovalue of 0.1 mm on the distance field for the entire model, resulting in the final proposed B0 position.

b. B1: Defined by shifting B0 by 2 mm in the e1-direction.

c. B2: Defined by shifting B1 by 3 mm in the e-2-direction.

d. B3: Defined by shifting B0 by 3 mm in the e-2-direction.

If point B3 has a distance of less than 0.1 mm to the complete lower model, the PSR is applied with an isovalue of 0.1 mm on the distance field for the entire model. The remaining four points undergo the same movement as B3.

To prevent the lower labial archwire 10d from intersecting with the teeth, advantageously shape attributes are assigned that contain prescribed minimum values for the distance scalar field. Points B0 and B3 prescribe a minimum distance of 0.1 mm, while the other two points B1, B2 prescribe a minimum distance of 2.1 mm. The ends of the archwire connect to the control points P0, P1, P2, and P15 (cf. FIG. 11B) of the closest buccal shield segment, by creating triangle faces 171-2 in FIG. 17. Previously generated faces comprising only three of the four control points shall be removed, as they would constitute internal faces within the final mesh.

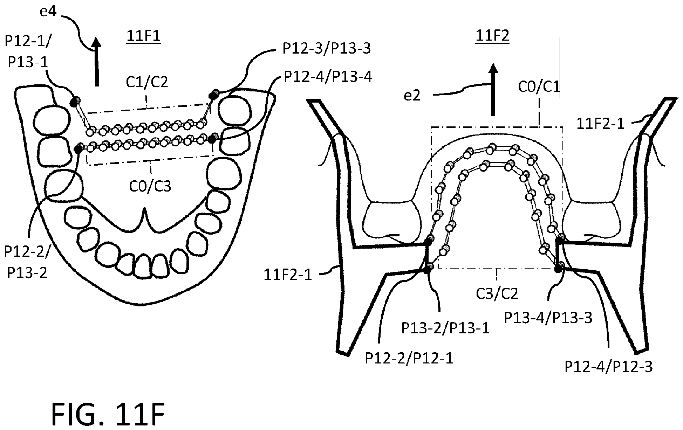

Instead of generating control points for each individual tooth/tooth pair as the segments before did, the transverse connector 10e now replicates these base points a fixed number of times (e.g., 10 instances). The transversal connector 10e may be associated with four control points C0 to C3 (cf., FIG. 11F). Gray points in drawings 11F1 and 11F2 represent positions below another point (e.g., P12/P13, where P12 is above P13), to provide more detail. White points and their corresponding gray points are specifically created for the transversal connector 10e. Additionally, black points and their corresponding gray points which were previously defined for the bite blocks 11F2-1, are also used in this design. Appliance element 10e attaches to points P12 and P13 of the segment 10b (cf. FIG. 11B). These points are created per tooth pair comprising one upper jaw tooth and one lower jaw tooth and are used four times in total (P12-1 to P12-4 and P13-1 to P13-4): twice for the second-to-last teeth and twice for the last teeth, with each pair applied once on each side of the jaw, thereby bridging the teeth of both sides (thick black lines in drawing 11F2). Drawing 11F1 illustrates a top view of the lower jaw and therefore only the relevant P12 points, as the P13 points are underneath them. Initially, a line is drawn between both P12 of the second-to-last teeth on each side and then divided into 11 segments between the respective start points illustrated as black points in drawing 11F1 (top view, so just P12 is illustrated as P13 is beneath it). These intermediate points serve as the first points for each base plane of the transversal connector, so the C0 points. The remaining three points are generated based on a specified thickness in the e2-direction and depth toward the throat, which is determined via PCA, as the negative "front" direction e4.

    a. C1: Defined by shifting C0 by 6 mm in the e4-direction.

    b. C2: Defined by shifting C1 by 5 mm in the e-2-direction.

    c. C3: Defined by shifting C0 by 5 mm in the e-2-direction.

Then, the PSR is applied for the upper points C0 and C1 with an isovalue of 2 mm on the distance field for the upper model, and for the lower points C2 and C3 with an isovalue of 7 mm on the same field. Drawing 11F2 illustrates the C0 points.

FIG. 17A shows the CS (initial polygon mesh 17-0) of all appliance elements generated based on the 3D representations of the patient's oral anatomy (jaws, teeth, and soft tissue visible in the background of CM 17-0). FIG. 17 shows the same CM with highlighted edges for a better depiction of the generated faces. FIG. 17B shows the first subdivision level 17-1 of the polygon mesh, FIG. 17C the second subdivision level 17-2, FIG. 17D the third subdivision level 17-3, and FIG. 17E the fourth and final subdivision level 17-4 of the polygon mesh. In this example, the termination condition was set to four iterations. The final polygon mesh 17-4 is then transformed (exported) 1600 into manufacturing-machine control data 291 for the manufacturing of the orthodontic appliance 280. The manufacturing-machine control data 291 is finally provided 1700 to corresponding manufacturing means 290 (e.g., 3D printer using biocompatible resins such as: "Biomed Clear" or "Dental LT Clear", provided by Formlabs, Somerville USA). Other manufacturing means or other appliance types may require different biocompatible materials. In an example implementation, the generated manufacturing-machine control data for an FR3 appliance in SLA format included approximately 34 million lines of code which has structure as shown in the following SLA example:

```
solid Visualization Toolkit generated SLA File
facet normal 0.24314156259904196 0.51190910886023488 0.82391215842637999

    outer loop

        vertex 28.296575546264648 -11.732752799987793 -4.3229889869689941

        vertex 28.445087432861328 -11.77068042755127 -4.3432507514953613

        vertex 28.505380630493164 -11.539187431335449 -4.5048737525939941

    endloop

endfacet
```

Generation of the control structure for volumetric subdivision manifolds, possibly including IVIs, is largely analog the procedures exemplified above for subdivision surface manifolds and can be carried out by a person skilled in the art. Also here, shape attribute information may include isovalues, in which case the PSR starting at an IP determined from the volumetric mesh provide positions within the scalar field(s) that exhibit the required values.

In the event of unforeseen anatomical anomalies or if key requirements regarding the input scan criteria are not fulfilled, the therapist 3 may provide input to adjust the CS (and/or modified control structure), either by modifying vertex positions or altering respective shape attributes. Advantageously, prior to executing 1300 a subdivision, system 100 receives a user input (from the therapist) which includes an adjustment of the control structure 111. The adjustment may be provided by the user as an input via the same interface which is used for providing the appliance type. The adjustment may comprise an adjusted mesh and/or adjusted shape attribute information replacing the mesh and/or shape attribute information of the control structure 111 or of modified control structure 111m. It is to be noted that an adjustment (e.g., a correction) may be performed already on the initial control structure generated by CSG 110. For this purpose, system 100 can include a visualization function which provides a visualization of the generated control structure to the therapist via a respective graphical user interface in a format which allows the therapist to apply respective adjustments. This visualization function may also be used to provide visualizations of intermediate hybrid subdivision results 111pm (part of the modified control structure) to the therapist for adjustment. With this optional user interaction mechanism, the therapist has the possibility to apply adjustments/corrections after each subdivision iteration, if appropriate.

In one embodiment, the above disclosed procedure for defining a CS that addresses the therapeutic aims may be accomplished by a learning-based approach instead of the above-described explicit geometric construction rules. This is accomplished by a machine learning approach learning the construction rules from respective training data, in particular using an artificial neural network (ANN) that receives as input the scans of the patient's oral anatomy 210 and the appliance type 211 of the orthodontic appliance, and outputs the control structure defining the appliance. The appliance type may also be determined from the oral anatomy. The ANN is trained using previously acquired data comprising oral anatomy scans, with the appliance type of the appliance, associated with respective control structures and possibly modified control structures as ground truth that define the appliance that serves the respective therapeutic aim. The data are split into training and testing data and are employed accordingly in the training of the ANN and its testing. A person skilled in the art is able to design the ANN as well as its training and testing. The data can be obtained from previous treatments, where the control structure has been defined manually by a therapist. Alternatively, the data can (additionally) be obtained from the above explicit geometric construction rules. Data augmentation can additionally be employed to improve generalization, for example, by introducing artificial holes or multiply scanned regions with scan deviations or noise into the oral anatomy scans to make the approach robust in terms of incomplete or imperfect scans, and thus rendering some of the above-mentioned preprocessing of the oral anatomy scans unnecessary. The appliance type of the appliance can be determined from the oral anatomy by a separate learning-based approach including a further ANN, providing the appliance type to the above-described ANN.

In an alternative solution, the appliance type of the appliance is omitted from the learning-based approach, in which case the appliance type is determined implicitly by the ANN, i.e., the learning-based approach maps from the oral anatomy scans to the control structures. In this solution, the receiving step of a respective computer-implemented method differs from the earlier described method in that one or more three-dimensional representations 210 of the patient's 2 individual teeth and oral soft tissue derived from measurements obtained by respective acquisition technology for characterizing a current state of the patient's oral anatomy are received, but appliance type 211 of the orthodontic appliance is not received, as the ANN has already implicitly learned the relevant control structures based on the three-dimensional representations 210. In this solution, the remaining steps of the previously described method are reused, wherein the construction rules for generating the control structure 111 are now implemented via the ANN. A particular advantage of the learning-based approach is, in general, its robustness, and its potential to support the therapist by proposing therapy designs, in particular if the appliance type of the appliance is not provided as input.

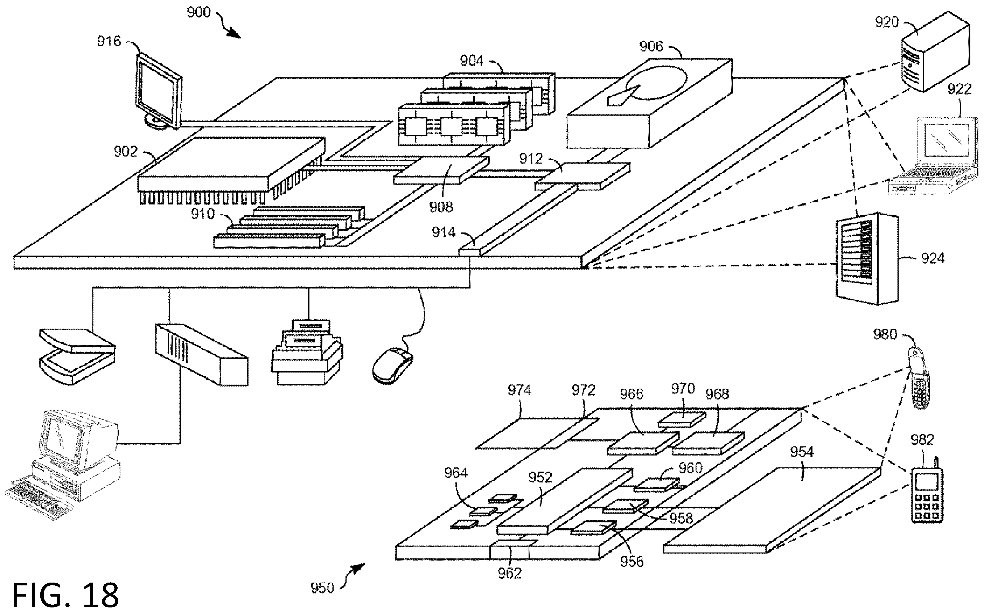

FIG. 18 is a diagram that shows an example of a generic computing device 900 and a generic mobile computing device 950, which may be used with the techniques described here. Computing device 900 relates in an exemplary embodiment to computing device 100 (cf. FIG. 1). Computing device 950 is intended to represent various forms of mobile devices, such as personal digital assistants, cellular telephones, smart phones, and other similar computing devices. Such front ends may also be implemented as integral parts of the computing device 100. In an exemplary embodiment of this disclosure the computing device 950 may serve as a frontend control device of the device 900. For example, the therapist may use the computing device 950 for receiving visualizations of a current polygon mesh and provide user inputs 211 (cf. FIG. 1, e.g., corrections) to computing device 900. Also, the audio output provided by computing device 900 may be played to the user via mobile computing device 950. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, ZigBee, WLAN, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, ZigBee or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

**Claims**

1. A computer-implemented method (1000) for automated generation of manufacturing-machine control data (291) for the manufacturing of an orthodontic appliance (280) for a patient (2), comprising:

   receiving (1100) an appliance type (211) of the orthodontic appliance, and one or more three-dimensional representations (210) of the patient's (2) individual teeth and oral soft tissue derived from measurements obtained by respective acquisition technology for characterizing a current state of the patient's oral anatomy;
   based on the three-dimensional representations (210), by using predefined construction rules (110-1) which are based on medical knowledge associated with orthodontic treatment with said appliance type (211), generating (1200) a control structure (111) comprising a mesh having vertices and cells, and shape attribute information comprising subdivision manifold-related shape attribute information and implicit manifold-related shape attribute information, wherein the mesh provides an initial representation (111pi) of an aimed appliance geometry associated with said appliance type (211), and wherein the subdivision manifold-related shape attribute information (111s) comprises at least one subdivision scheme, wherein the implicit manifold-related shape attribute information (111i) comprises at least one scalar field, and for each vertex of the mesh (111pi), the respective shape attribute information for evaluating a position of the respective vertex according to the respective subdivision scheme and for evaluating a position of the respective vertex according to the respective scalar field, and respective shape attribute weights defining how much said positions contribute to a position of the respective vertex;

executing (1300) a subdivision according to the at least one subdivision scheme to generate a modified control structure (111m) comprising a modified mesh (111pm) representation, by splitting existing cells and adding new vertices with respective shape attribute information (111sm, 111im);

evaluating (1400), for each added new vertex, the respective shape attribute information to obtain the position of the respective vertex;

repeating (1500) the executing (1300), and evaluating (1400) steps for the modified control structure, until a predefined termination condition is fulfilled to obtain a final mesh (111pf);

transforming (1600) the final mesh (111pf) into manufacturing-machine control data (291) for the manufacturing of the orthodontic appliance (280); and

providing (1700) the manufacturing-machine control data (291) to corresponding manufacturing means (290).

2.  The method of claim 1, wherein the shape attribute information further contains prescribed minimum or maximum values for one or more selected scalar fields, and if such a maximum or minimum condition is violated by the position of the respective vertex obtained in the evaluating (1400) step, the position is moved to a respective isosurface with respective isovalue given by said minimum or maximum using respective point selection rules and rules to obtain a position therefrom if more than one scalar field is involved.

3.  The method of any of the previous claims, wherein the termination condition is fulfilled if a predefined number of subdivision iterations has been performed, or if the geometric change of the mesh caused by a subdivision iteration falls below a predefined threshold.

4.  The method of any of the previous claims, wherein, in case of a plurality of involved subdivision schemes, the involved subdivision schemes are topologically equivalent in that they divide the same cells of the mesh into the same number of parts and produce corresponding vertices.

5.  The method of any of the previous claims, wherein evaluating (1400) further comprises evaluating, for existing vertices, the respective shape attribute information to modify the position of the respective existing vertex.

6.  The method of any of the previous claims, wherein, prior to executing (1300) a subdivision, further comprising: receiving a user input (211) which comprises an adjustment of the control structure (111) or of the modified control structure (111m), wherein the adjustment comprises an adjusted mesh and/or adjusted shape attribute information replacing the mesh and shape attribute information of the control structure (111) and/or of the modified control structure (111m).

7.  The method of any of the previous claims, wherein the one or more three-dimensional representations (210) comprise surface-based representations of any of the following: the patient's teeth and soft tissue and/or volumetric representations of any of the following: the patient's bones, teeth, roots, and soft tissue.

8.  The method of any of the previous claims, wherein the manufacturing-machine control data are provided (1700) as an additively or substractively manufacturable data format to a manufacturing device selected from any of the following: 3D printing device, CNC machining device, selective laser cutting device, selective laser melting device, selective laser sintering device, injection molding device, and automatic bending, wherein the 3D manufacturing data format is selected from any of: STL file, OBJ-file, PLY-file, and AMF-file.

9.  The method of any of the previous claims, wherein the predefined construction rules are learned by an artificial neural network from previously acquired training data comprising oral anatomy scans and appliance types of respective appliances, and comprising associated respective control structures as ground truth defining the appliance that serves a respective therapeutic aim, and the artificial neural network receives as input the scans of the patient's oral anatomy (210) and the appliance type (211) of the orthodontic appliance, and outputs the control structure (111).

10. A computer program product adapted for automated generation of manufacturing-machine control data (291) for the manufacturing of an orthodontic appliance (280) for a patient (2), comprising computer readable instructions that, when loaded into a memory of a computing device and executed by at least one processor of the computing device, causes the computing device to perform the computer-implemented method according to any of the previous claims.

11. A computer system (100) adapted for automated generation of manufacturing-machine control data (291) for the manufacturing of an orthodontic appliance (280) for a patient (2), the system comprising a memory storing computer-readable instructions implementing a plurality of functional modules (110, 120, 125, 130), and one or more processors of the computing device for executing the computer-readable instructions to instantiate said functional modules for performing steps according to the method of any of the claims 1 to 9.

FIG. 1

<u>1000</u>

```
receiving sample type and three-dimensional representations
of a patient's individual teeth and oral soft tissue              ⟩— 1100

              ↓

generating control mesh and shape attribute information by
using predefined construction rules which are based on
medical knowledge associated with orthodontic treatment          ⟩— 1200
              with said appliance type

              ↓

executing a subdivision according to subdivision scheme
comprised by global shape attribute to modify mesh
representation by splitting existing polygons and adding new      ⟩— 1300
                      vertices

              ↓

Evaluating shape attributes of added vertices to obtain
respective positions, and setting the position of each new       ⟩— 1400
          vertex to weighted average of the positions

              ↓
```

⟩— 1500    NO    ⟨ termination
                   condition
                   fulfilled?  ⟩— 1520

YES

```
transforming final mesh into production-machine control data     ⟩— 1600
for the manufacturing of the orthodontic appliance

              ↓

providing production-machine control data to manufacturing       ⟩— 1700
                      means
```

# FIG. 2

301

301c

1/2
301a

301r

1/2
301b

302

1/8
302c

3/8
302d

302r

3/8
302b

302a
1/8

# FIG. 3

231

231-2

231-3

231-s

1 0 1
231-1

232

232-2

232-1

1 0 1

233

233-2

1 0 -1
233-1

# FIG. 4

41 42 43

FIG. 4A

FIG. 4B

FIG. 5A

FIG. 5B

FIG. 6

71     72

72-1

73     74

73-1     74-2

74-1

FIG. 7

81     82     83

FIG. 8

91 92 93

94 95 96

94-1 95-1 96-1

# FIG. 9

10

10b

10e

10f

10c

10a

10d

# FIG. 10

FIG. 11A

FIG. 11B

FIG. 11C

A6   A7

A5   A8

A4   A9
A10

A3

11D-3

11D-1

e2

A

e1

11D-2

# FIG. 11D

B0

B1

B2

B3   11E-1

e2

e1

# FIG. 11E

FIG. 11F

FIG. 12

FIG. 13

141

e1

e2

141-2    141-1

142

e1

142-2

142-1

142-3

142-4

143

143-1

# FIG. 14

151

151-1

152

152-1

153

153-1    153-2

154

154-1

# FIG. 15

16a

16b

16a-1

16b-1
16b-2
16b-3
16b-4
16b-5
16b-6

16c

16d

16c-1
16c-2
16c-3
16c-4 16c-5

16d-1

16e

16e-1

FIG. 16A

<u>16f</u>

FIG. 16B

FIG. 17

FIG. 17A

FIG. 17B

FIG. 17C

FIG. 17D

FIG. 17E

FIG. 18

Europäisches
Patentamt

European
Patent Office

Office européen
des brevets

# EUROPEAN SEARCH REPORT

**Application Number**

EP 24 21 4252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ARUANNO BEATRICE ET AL: "A Digital Workflow for the Design and Additive Manufacturing of Multi-thickness Dental Aligners", COMPUTER-AIDED DESIGN AND APPLICATIONS, 4 December 2022 (2022-12-04), pages 111-121, XP093269024, US ISSN: 1686-4360, DOI: 10.14733/cadaps.2023.S6.111-121 * abstract * * page 112 - page 114 * * the whole document * | 1-11 | INV.<br>G06F30/23<br>A61C13/00<br>G06T17/20<br>G06F30/27<br><br>ADD.<br>G06F113/10<br>G06F111/16 |
| Y | US 2022/211468 A1 (RASLAMBEKOV ISLAM KHASANOVICH [US]) 7 July 2022 (2022-07-07) * abstract * * paragraph [0071] * * paragraph [0150] - paragraph [0157] * * paragraph [0193] - paragraph [0203] * * figure 10A * * the whole document * | 1-11 | |
| A | ZHANG ET AL: "3D finite element meshing from imaging data", COMPUTER METHODS IN APPLIED MECHANICS AND ENGINEERING, NORTH-HOLLAND, AMSTERDAM, NL, vol. 194, no. 48-49, 15 November 2005 (2005-11-15), pages 5083-5106, XP005044918, ISSN: 0045-7825, DOI: 10.1016/J.CMA.2004.11.026 * the whole document * | 1-11 | TECHNICAL FIELDS SEARCHED (IPC)<br><br>G06F<br>G06T<br>A61C |

-/--

The present search report has been drawn up for all claims

| Place of search | Date of completion of the search | Examiner |
|---|---|---|
| Munich | 14 April 2025 | Radev, Boyan |

**page 1 of 2**

| | Europäisches Patentamt<br>European Patent Office<br>Office européen des brevets | **EUROPEAN SEARCH REPORT** | **Application Number**<br>EP 24 21 4252 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/239987 A1 (JONES PERRY E [US] ET AL) 8 August 2019 (2019-08-08)<br>* abstract *<br>* paragraph [0077] - paragraph [0078] *<br>* claims 1-14 *<br>----- | 1-11 | |
| A | XUEHUAN MENG ET AL: "Effects of different designs of orthodontic clear aligners on the maxillary central incisors in the tooth extraction cases: a biomechanical study",<br>BMC ORAL HEALTH, BIOMED CENTRAL LTD, LONDON, UK,<br>vol. 23, no. 1, 22 June 2023 (2023-06-22), pages 1-12, XP021320498,<br>DOI: 10.1186/S12903-023-03106-8<br>* the whole document *<br>----- | 1-11 | |
| A | VINCENZO GRASSIA ET AL: "Accuracy (trueness and precision) of 3D printed orthodontic models finalized to clear aligners production, testing crowded and spaced dentition",<br>BMC ORAL HEALTH, BIOMED CENTRAL LTD, LONDON, UK,<br>vol. 23, no. 1, 2 June 2023 (2023-06-02), pages 1-10, XP021319663,<br>DOI: 10.1186/S12903-023-03025-8<br>* the whole document *<br>----- | 1-11 | TECHNICAL FIELDS SEARCHED (IPC) |

The present search report has been drawn up for all claims

| Place of search | Date of completion of the search | Examiner |
|---|---|---|
| Munich | 14 April 2025 | Radev, Boyan |

## ANNEX TO THE EUROPEAN SEARCH REPORT
## ON EUROPEAN PATENT APPLICATION NO.

EP 24 21 4252

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2022211468 A1 | 07-07-2022 | US 11191618 B1<br>US 2022211468 A1 | 07-12-2021<br>07-07-2022 |
| US 2019239987 A1 | 08-08-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOEBEL CF** ; **LUX C**. functional regulator type 3 according to Fraenkel-part 2. *Kieferorthopaedie*, 2015, vol. 29 (1), 1-19
- **I. FUJISHIRO** ; **Y. MAEDA** ; **H. SATO**. Interval volume: a solid fitting technique for volumetric data display and analysis. *Proceedings Visualization '95, Atlanta, GA, USA*, 1995, 151-158
- **ROSER, C.** ; **LUX, C.** *Kieferorthopaedie*, vol. 37
- **ROSER C** ; **HODECKER LD** ; **KOEBEL C** ; **LUX CJ** ; **RUCKES D** ; **RUES S** ; **ZENTHÖFER A**. Mechanical properties of CAD/CAM-fabricated in comparison to conventionally fabricated functional regulator 3 appliances. *Sci Rep.*, 19 July 2021, vol. 11 (1), 14719
- **KOEBEL, C. F.** ; **LUX, C**. The functional regulator type 3 according to Fränkel-part 1. *Kieferorthopädie*, 2012, vol. 26 (1), 33-43